# EUROPEAN PATENT APPLICATION

(11) **EP 4 838 940 A1**
(43) Date of publication of application: **11.11.2026**
(21) Application number: 25747568.1
(22) Date of filing: 17.01.2025
(51) Int. Cl.: H04W 24/08

(54) **COMMUNICATION METHOD AND COMMUNICATION APPARATUS**

(30) Priority: 02.02.2024 CN 202410161599
(71) Applicant: Huawei Technologies Co., Ltd., Shenzhen, Guangdong 518129 (CN)
(72) Inventor: HOU, Hailong, Shenzhen, Guangdong 518129 (CN); GUO, Zhiheng, Shenzhen, Guangdong 518129 (CN); LU, Shaozhong, Shenzhen, Guangdong 518129 (CN); SONG, Xinghua, Shenzhen, Guangdong 518129 (CN)
(74) Representative: Huawei European IPR
(86) International application number: PCT/CN2025/072978
(87) International publication number: WO 2025/161996

(57) **Abstract**

This application provides a communication method and a communication apparatus, which can adapt to more scenarios, and can be used in communication systems. The method includes: A terminal device receives radio resource management RRM measurement configuration information. The RRM measurement configuration information indicates to perform first-type filtering processing and/or second-type filtering processing. There is a correspondence between the first-type filtering processing and a subband full-duplex time unit, and there is a correspondence between the second-type filtering processing and a non-subband full-duplex time unit. The first-type filtering processing is filtering processing on a physical layer measurement result in the subband full-duplex time unit, and the second-type filtering processing is filtering processing on a physical layer measurement result in the non-subband full-duplex time unit. The terminal device performs first-type filtering processing and/or second-type filtering processing according to the RRM measurement configuration information.

## Description

This application claims priority to Chinese Patent Application No. 202410161599.0, filed with the China National Intellectual Property Administration on February 2, 2024 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

During radio resource management (radio resource management, RRM) measurement, a terminal device may measure, in different time units, a signal sent by a network device, for example, a channel state information reference signal (channel state information reference signal, CSI-RS) or a synchronization signal/physical broadcast channel block (synchronization signal/physical broadcast channel block, SSB), to obtain physical layer measurement results in the time units, and perform filtering on the physical layer measurement results to obtain a filtered measurement result. The terminal device may report the filtered measurement result to the network device, to determine whether the terminal device needs to perform cell handover. Alternatively, the terminal device may determine, based on the filtered measurement result, whether to select a cell or reselect a cell. In the foregoing solution, the process of performing filtering on the physical layer measurement results is performing combined filtering on all reported physical layer measurement results.

For this solution, in subband full-duplex scenarios, because interference in different time units differs greatly, channel quality in the different time units differs greatly. Consequently, the foregoing filtering solution in RRM measurement limits application scenarios of the RRM measurement solution.

### SUMMARY

Embodiments of this application provide a communication method and a communication apparatus, to adapt to more scenarios.

To achieve the foregoing objective, the following technical solutions are used in this application:

According to a first aspect, a communication method is provided. The communication method includes: A terminal device receives radio resource management RRM measurement configuration information. The RRM measurement configuration information indicates to perform first-type filtering processing and/or second-type filtering processing. There is a correspondence between the first-type filtering processing and a subband full-duplex time unit, and there is a correspondence between the second-type filtering processing and a non-subband full-duplex time unit. The first-type filtering processing is filtering processing on a physical layer measurement result in the subband full-duplex time unit, and the second-type filtering processing is filtering processing on a physical layer measurement result in the non-subband full-duplex time unit. The terminal device performs first-type filtering processing and/or second-type filtering processing according to the RRM measurement configuration information.

Based on the communication method provided in the first aspect, the terminal device may perform filtering processing according to the RRM measurement configuration information. The RRM measurement configuration information indicates that physical layer measurement results in different types of time units, for example, the subband full-duplex time unit and the non-subband full-duplex time unit, each use one filtering processing manner, for example, the first-type filtering processing and the second-type filtering processing. Therefore, the terminal device may separately perform filtering processing on the physical layer measurement results in the different types of time units based on the filtering processing manner corresponding to each type of time unit, so that RRM measurement and reporting can be more flexible and adapt to more scenarios.

It should be understood that unless otherwise specified, the "terminal device" in this application may be a terminal device, a component (for example, a processor, a chip, or a chip system) in the terminal device, or a logical module or software that can implement all or a part of functions of the terminal device.

In addition, the separately performing filtering processing on the physical layer measurement results in the different types of time units based on the filtering processing manner corresponding to each type of time unit can avoid mutual impact between filtering results in different types of time units, thereby improving accuracy of an RRM measurement result.

In a possible implementation solution, the RRM measurement configuration information includes first RRM measurement configuration information. The first RRM measurement configuration information is associated with the physical layer measurement result in the subband full-duplex time unit. In this way, the terminal device can separately perform filtering processing on the physical layer measurement result in the subband full-duplex time unit.

In a possible implementation solution, that the terminal device performs first-type filtering processing and/or second-type filtering processing according to the RRM measurement configuration information includes: performing first-type filtering processing on a physical layer measurement result in a subband full-duplex time unit in at least one time unit based on the first RRM measurement configuration information, to obtain a first-type measurement result. In this way, filtering processing can be separately performed on the physical layer measurement result in the subband full-duplex time unit.

In a possible implementation solution, the first RRM measurement configuration information is associated with a first measurement result corresponding to a first measurement quantity, and the first measurement result is obtained through first-type filtering processing on a physical layer measurement result corresponding to the first measurement quantity in the subband full-duplex time unit in the at least one time unit. The first measurement result belongs to the first-type measurement result. In this way, a network device configures a measurement quantity, for example, the first measurement quantity, so that the terminal device can perform filtering processing based on the measurement quantity configured by the network device, thereby improving flexibility of RRM measurement.

In a possible implementation solution, the communication method provided in the first aspect may further include: The terminal device sends the first-type measurement result, or performs cell selection or reselection based on the first-type measurement result. The terminal device sends the first-type measurement result, so that the network device can obtain an RRM measurement result for cell handover, thereby improving service continuity of the terminal device. The terminal device performs cell selection and/or reselection based on the first-type measurement result, so that service continuity of the terminal device can be improved.

In a possible implementation solution, the RRM measurement configuration information includes second RRM measurement configuration information, and the second RRM measurement configuration information is associated with the physical layer measurement result in the non-subband full-duplex time unit. In this way, the terminal device can separately perform filtering processing on the physical layer measurement result in the non-subband full-duplex time unit.

In a possible implementation solution, that the terminal device performs first-type filtering processing and/or second-type filtering processing according to the RRM measurement configuration information includes: The terminal device performs second-type filtering processing on a physical layer measurement result in a non-subband full-duplex time unit in the at least one time unit according to the second RRM measurement configuration information, that is, separately performs filtering processing on the physical layer measurement result in the non-subband full-duplex time unit, to obtain a second-type measurement result. In this way, filtering processing can be separately performed on the physical layer measurement result in the non-subband full-duplex time unit.

In a possible implementation solution, the second RRM measurement configuration information is associated with a second measurement result corresponding to a second measurement quantity, and the second measurement result is obtained through second-type filtering processing on a physical layer measurement result corresponding to the second measurement quantity in the non-subband full-duplex time unit in the at least one time unit. The second measurement result belongs to the second-type measurement result. In this way, the network device configures a measurement quantity, for example, the second measurement quantity, so that the terminal device can perform filtering processing based on the measurement quantity configured by the network device, thereby improving flexibility of RRM measurement.

In a possible implementation solution, the communication method provided in the first aspect may further include: The terminal device sends the second-type measurement result, or performs cell selection or reselection based on the second-type measurement result. The terminal device sends the second-type measurement result, so that the network device can obtain an RRM measurement result for cell handover, thereby improving service continuity of the terminal device. The terminal device performs cell selection and/or reselection based on the second-type measurement result, so that service continuity of the terminal device can be improved.

In a possible implementation solution, the RRM measurement configuration information includes third RRM measurement configuration information. The third RRM measurement configuration information is associated with the physical layer measurement result in the subband full-duplex time unit and the physical layer measurement result in the subband full-duplex time unit. In this way, a quantity of pieces of RRM measurement configuration information can be reduced, to reduce resource overheads.

In a possible implementation solution, that the terminal device performs first-type filtering processing and/or second-type filtering processing according to the RRM measurement configuration information includes: The terminal device performs first-type filtering processing on a physical layer measurement result in a subband full-duplex time unit in a plurality of time units according to the third RRM measurement configuration information, to obtain a first-type measurement result; and the terminal device performs second-type filtering processing on a physical layer measurement result in a non-subband full-duplex time unit in the plurality of time units according to the third RRM measurement configuration information, to obtain a second-type measurement result. In this way, the terminal device can separately perform filtering processing on the physical layer measurement result in the subband full-duplex time unit, and separately perform filtering processing on the physical layer measurement result in the non-subband full-duplex time unit.

In a possible implementation solution, the third RRM measurement configuration information is associated with a first measurement result corresponding to a first measurement quantity and a second measurement result corresponding to a second measurement quantity. The first measurement result is obtained through first-type filtering processing on a physical layer measurement result corresponding to the first measurement quantity in the subband full-duplex time unit in the plurality of time units. The second measurement result is obtained through second-type filtering processing on a physical layer measurement result corresponding to the second measurement quantity in the non-subband full-duplex time unit in the plurality of time units. The first measurement result belongs to the first-type measurement result, and the second measurement result belongs to the second-type measurement result. In this way, the network device configures measurement quantities, for example, the first measurement quantity and the second measurement quantity, so that the terminal device can perform filtering processing based on the measurement quantities configured by the network device, thereby improving flexibility of RRM measurement.

In a possible implementation solution, the third RRM measurement configuration information includes information indicating a first filter coefficient and a second filter coefficient, the first filter coefficient is used to obtain the first measurement result, and the second filter coefficient is used to obtain the second measurement result. In this way, the network device can configure filter coefficients, so that RRM measurement is more flexible.

In a possible implementation solution, the communication method provided in the first aspect may further include: The terminal device sends the first-type measurement result and/or the second-type measurement result. In this way, the network device can obtain an RRM measurement result for cell handover, thereby improving service continuity of the terminal device.

In a possible implementation solution, that the terminal device sends the first-type measurement result and/or the second-type measurement result includes: The terminal device sends the first-type measurement result and/or the second-type measurement result based on a magnitude of at least one of the first-type measurement result and the second-type measurement result.

In a possible implementation solution, the communication method provided in the first aspect may further include: The terminal device performs cell selection based on the first-type measurement result and/or the second-type measurement result, or the terminal device performs cell reselection based on the first-type measurement result and/or the second-type measurement result. In this way, service continuity of the terminal device can be improved.

In a possible implementation solution, the first measurement quantity is one of the following: a signal to interference plus noise ratio SINR, reference signal received quality RSRQ, or a received signal strength indicator RSSI; and the second measurement quantity is one of the following: the SINR, the RSRQ, or the RSSI. In this way, a measurement quantity can be configured based on an actual scenario, thereby further improving flexibility of RRM measurement.

According to a second aspect, a communication method is provided. The communication method includes: A network device determines radio resource management RRM measurement configuration information. The RRM measurement configuration information indicates to perform first-type filtering processing and/or second-type filtering processing. There is a correspondence between the first-type filtering processing and a subband full-duplex time unit, and there is a correspondence between the second-type filtering processing and a non-subband full-duplex time unit. The first-type filtering processing is filtering processing on a physical layer measurement result in the subband full-duplex time unit, and the second-type filtering processing is filtering processing on a physical layer measurement result in the non-subband full-duplex time unit. The network device sends the RRM measurement configuration information.

Based on the communication method provided in the second aspect, the network device may generate and send the RRM measurement configuration information. The RRM measurement configuration information indicates that physical layer measurement results in different types of time units, for example, the subband full-duplex time unit and the non-subband full-duplex time unit, each use one filtering processing manner, for example, the first-type filtering processing and the second-type filtering processing. In this way, a terminal device can perform filtering processing on the physical layer measurement results in the different types of time units based on the filtering processing manner corresponding to each type of time unit, so that RRM measurement and reporting can be more flexible and adapt to more scenarios.

In addition, the performing filtering processing on the physical layer measurement results in the different types of time units based on the filtering processing manner corresponding to each type of time unit can further improve accuracy of RRM measurement.

It should be understood that unless otherwise specified, the "network device" in this application may be a network device, a component (for example, a processor, a chip, or a chip system) in the network device, or a logical module or software that can implement all or a part of functions of the network device.

In a possible implementation solution, the RRM measurement configuration information includes first RRM measurement configuration information. The first RRM measurement configuration information is associated with the physical layer measurement result in the subband full-duplex time unit.

In a possible implementation solution, the first RRM measurement configuration information is associated with a first measurement result corresponding to a first measurement quantity, and the first measurement result is obtained through first-type filtering processing on a physical layer measurement result corresponding to the first measurement quantity in a subband full-duplex time unit in at least one time unit.

In a possible implementation solution, the communication method provided in the second aspect may further include: The network device receives a first-type measurement result. The first-type measurement result is obtained by the terminal device by performing first-type filtering processing on a physical layer measurement result in the subband full-duplex time unit in the at least one time unit based on the first RRM measurement configuration, and the first measurement result belongs to the first-type measurement result.

In a possible implementation solution, the RRM measurement configuration information includes second RRM measurement configuration information, and the second RRM measurement configuration information is associated with the physical layer measurement result in the non-subband full-duplex time unit.

In a possible implementation solution, the second RRM measurement configuration information is associated with a second measurement result corresponding to a second measurement quantity, and the second measurement result is obtained through second-type filtering processing on a physical layer measurement result corresponding to the second measurement quantity in a non-subband full-duplex time unit in the at least one time unit.

In a possible implementation solution, the communication method provided in the second aspect may further include: The network device receives a second-type measurement result. The second-type measurement result is obtained by the terminal device by performing second-type filtering processing on a physical layer measurement result in the non-subband full-duplex time unit in the at least one time unit according to the second RRM measurement configuration information, and the second measurement result belongs to the second-type measurement result.

In a possible implementation solution, the RRM measurement configuration information includes third RRM measurement configuration information, and the third RRM measurement configuration information is associated with the physical layer measurement result in the subband full-duplex time unit and the physical layer measurement result in the subband full-duplex time unit.

In a possible implementation solution, the RRM measurement configuration information includes the third RRM measurement configuration information, and the third RRM measurement configuration information is associated with a first measurement result corresponding to a first measurement quantity and a second measurement result corresponding to a second measurement quantity. The first measurement result is obtained through first-type filtering processing on a physical layer measurement result corresponding to the first measurement quantity in a subband full-duplex time unit in a plurality of time units. The second measurement result is obtained through second-type filtering processing on a physical layer measurement result corresponding to the second measurement quantity in a non-subband full-duplex time unit in the plurality of time units.

In a possible implementation solution, the communication method provided in the second aspect may further include: The network device receives a first-type measurement result and/or a second-type measurement result. The first-type measurement result is obtained by the terminal device by performing first-type filtering processing on a physical layer measurement result in the subband full-duplex time unit in the plurality of time units according to the third RRM measurement configuration information, and the second-type measurement result is obtained by the terminal device by performing second-type filtering processing on a physical layer measurement result in the non-subband full-duplex time unit in the plurality of time units according to the third RRM measurement configuration information. The first measurement result belongs to the first-type measurement result, and the second measurement result belongs to the second-type measurement result.

In a possible implementation solution, the third RRM measurement configuration information includes information indicating a first filter coefficient and a second filter coefficient, the first filter coefficient is used to obtain the first measurement result corresponding to the first measurement quantity, and the second filter coefficient is used to obtain the second measurement result corresponding to the second measurement quantity.

In a possible implementation solution, the first measurement quantity is one of the following: a signal to interference plus noise ratio SINR, reference signal received quality RSRQ, or a received signal strength indicator RSSI; and the second measurement quantity is one of the following: the SINR, the RSRQ, or the RSSI.

In addition, for technical effects of the communication method in the second aspect, refer to the technical effects of the communication method in the first aspect. Details are not described herein again.

According to a third aspect, a communication method is provided. The communication method includes: A terminal device receives fourth radio resource management RRM measurement configuration information. The fourth RRM measurement configuration information includes first information, and the first information indicates a third filter coefficient associated with a physical layer measurement result in a subband full-duplex time unit and a fourth filter coefficient associated with a physical layer measurement result in a non-subband full-duplex time unit. The terminal device performs third-type filtering processing on a physical layer measurement result in a subband full-duplex time unit in a plurality of time units and a physical layer measurement result in a non-subband full-duplex time unit in the plurality of time units based on the third filter coefficient and the fourth filter coefficient, to obtain a third-type measurement result.

Based on the method provided in the third aspect, the terminal device may perform filtering processing according to the fourth RRM measurement configuration information. In the fourth RRM measurement configuration information, physical layer measurement results in different types of time units, for example, the subband full-duplex time unit and the non-subband full-duplex time unit, are each associated with one filter coefficient, for example, the third filter coefficient and the fourth filter coefficient. In this way, when filtering the physical layer measurement results in the different types of time units, the terminal device can use filter coefficients corresponding to the different types of time units, so that RRM measurement can be more flexible and adapt to more scenarios.

In addition, filter coefficients may be further configured based on different types of time units, so that accuracy of RRM measurement can be improved.

In a possible implementation solution, the fourth RRM measurement configuration information is associated with a third measurement result corresponding to a third measurement quantity, and the third measurement result is obtained through third-type filtering processing on a physical layer measurement result corresponding to the third measurement quantity in the subband full-duplex time unit in the plurality of time units and a physical layer measurement result corresponding to the third measurement quantity in the non-subband full-duplex time unit in the plurality of time units. The third measurement result belongs to the third-type measurement result. In this way, a network device may configure a measurement quantity, for example, the third measurement quantity, thereby improving flexibility of RRM measurement.

In a possible implementation solution, the third measurement quantity includes at least one of the following: a signal to interference plus noise ratio SINR, reference signal received quality RSRQ, and a received signal strength indicator RSSI. In this way, a measurement quantity can be configured based on an actual scenario, so that RRM measurement is more flexible.

In a possible implementation solution, the communication method provided in the first aspect may further include: The terminal device sends the third-type measurement result, or the terminal device performs cell selection and/or reselection based on the third-type measurement result. The terminal device sends the third-type measurement result, so that the network device can obtain an RRM measurement result for cell handover, thereby improving service continuity of the terminal device. The terminal device performs cell selection and/or reselection based on the third-type measurement result, so that service continuity of the terminal device can be improved.

According to a fourth aspect, a communication method is provided. The communication method includes: A network device obtains fourth radio resource management RRM measurement configuration information. The fourth RRM measurement configuration information includes first information, and the first information indicates a third filter coefficient associated with a physical layer measurement result in a subband full-duplex time unit and a fourth filter coefficient associated with a physical layer measurement result in a non-subband full-duplex time unit. The network device sends the fourth RRM configuration information.

Based on the method provided in the fourth aspect, the network device may generate and send the fourth RRM measurement configuration information. In the fourth RRM measurement configuration information, physical layer measurement results in different types of time units, for example, the subband full-duplex time unit and the non-subband full-duplex time unit, are each associated with one filter coefficient, for example, the third filter coefficient and the fourth filter coefficient. In this way, when filtering the physical layer measurement results in the different types of time units, a terminal device can use filter coefficients corresponding to the different types of time units, so that RRM measurement can be more flexible, and the RRM measurement solution can adapt to more scenarios.

In addition, filter coefficients may be further configured based on different types of time units, so that accuracy of RRM measurement can be improved.

In a possible implementation solution, the fourth RRM measurement configuration information is associated with a third measurement result corresponding to a third measurement quantity. The third measurement result is obtained through third-type filtering processing on a physical layer measurement result corresponding to the third measurement quantity in a subband full-duplex time unit in a plurality of time units and a physical layer measurement result corresponding to the third measurement quantity in a non-subband full-duplex time unit in the plurality of time units.

In a possible implementation solution, the third measurement quantity includes at least one of the following: a signal to interference plus noise ratio SINR, reference signal received quality RSRQ, and a received signal strength indicator RSSI.

In a possible implementation solution, the communication method provided in the second aspect may further include: The network device receives a third-type measurement result. The third-type measurement result is obtained by the terminal device by performing third-type filtering processing on physical layer measurement results in the plurality of time units according to the fourth RRM measurement configuration information, and the third measurement result belongs to the third-type measurement result.

For technical effects of the communication method in the fourth aspect, refer to the technical effects of the communication method in the third aspect. Details are not described herein again.

According to a fifth aspect, a communication apparatus is provided. The communication apparatus is configured to perform the communication method according to any one of the implementations of the first aspect to the fourth aspect.

In this application, the communication apparatus according to the fifth aspect may be a terminal device or a network device, a chip (system) or another component or part that may be disposed in the terminal device or the network device, or an apparatus including the terminal device or the network device.

It should be understood that the communication apparatus according to the fifth aspect includes a corresponding module, unit, or means (means) for implementing the communication method according to any one of the first aspect to the fourth aspect. The module, unit, or means may be implemented by hardware, software, or hardware executing corresponding software. The hardware or software includes one or more modules or units configured to perform functions in the foregoing communication method.

According to a sixth aspect, a communication apparatus is provided. The communication apparatus includes at least one processor, and the processor is configured to perform the communication method according to any one of the possible implementations of the first aspect to the fourth aspect.

In a possible design solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In a possible design solution, the communication apparatus according to the sixth aspect may further include one or more memories. The memory may be integrated with the at least one processor, or may be disposed separately. The memory may be configured to store a computer program and/or data related to the communication method according to any one of the first aspect to the fourth aspect.

In this application, the communication apparatus according to the sixth aspect may be a terminal device or a network device, a chip (system) or another component or part that may be disposed in the terminal device or the network device, or an apparatus including the terminal device or the network device.

According to a seventh aspect, a communication apparatus is provided. The communication apparatus includes at least one processor, the at least one processor is coupled to one or more memories, and the processor is configured to execute a computer program stored in the memory, to enable the communication apparatus to perform the communication method according to any one of the possible implementations of the first aspect to the fourth aspect.

In a possible design solution, the communication apparatus according to the seventh aspect may further include a transceiver. The transceiver may be a transceiver circuit or an interface circuit. The transceiver may be used by the communication apparatus according to the seventh aspect to communicate with another communication apparatus.

In this application, the communication apparatus according to the seventh aspect may be a terminal device or a network device, a chip (system) or another component or part that may be disposed in the terminal device or the network device, or an apparatus including the terminal device or the network device.

According to an eighth aspect, a communication apparatus is provided, including a processor and a memory. The memory is configured to store a computer program, and when the processor executes the computer program, the communication apparatus is enabled to perform the communication method according to any one of the implementations of the first aspect to the fourth aspect.

In a possible design solution, the communication apparatus according to the eighth aspect may further include a transceiver. The transceiver may be a transceiver circuit or an interface circuit. The transceiver may be used by the communication apparatus according to the eighth aspect to communicate with another communication apparatus.

In this application, the communication apparatus according to the eighth aspect may be a terminal device or a network device, a chip (system) or another component or part that may be disposed in the terminal device or the network device, or an apparatus including the terminal device or the network device.

According to a ninth aspect, a communication apparatus is provided, including a processor. The processor is configured to be coupled to a memory; and read a computer program in the memory and then perform, according to the computer program, the communication method according to any one of the implementations of the first aspect to the fourth aspect.

In a possible design solution, the communication apparatus according to the ninth aspect may further include a transceiver. The transceiver may be a transceiver circuit or an interface circuit. The transceiver may be used by the communication apparatus in the ninth aspect to communicate with another communication apparatus.

In this application, the communication apparatus according to the ninth aspect may be a terminal device or a network device, a chip (system) or another component or part that may be disposed in the terminal device or the network device, or an apparatus including the terminal device or the network device.

According to a tenth aspect, a processor is provided. The processor is configured to perform the communication method according to any one of the possible implementations of the first aspect to the fourth aspect.

According to an eleventh aspect, a communication system is provided. The communication system includes one or more terminal devices and one or more network devices. The terminal device may be configured to perform the method according to the first aspect, and the network device may be configured to perform the method according to the second aspect. Alternatively, the terminal device may be configured to perform the method according to the third aspect, and the network device may be configured to perform the method according to the fourth aspect.

According to a twelfth aspect, a chip or chip system is provided, including at least one processor and a communication interface. The at least one processor is coupled to a memory through the communication interface, and when the at least one processor executes a computer program or instructions in the memory, the communication method according to any one of the possible implementations of the first aspect to the fourth aspect is performed.

According to a thirteenth aspect, a computer-readable storage medium is provided, including a computer program or instructions. When the computer program or the instructions are run on a computer, the computer is enabled to perform the communication method according to any one of the possible implementations of the first aspect to the fourth aspect.

According to a fourteenth aspect, a computer program product is provided, including a computer program or instructions. When the computer program or the instructions are run on a computer, the computer is enabled to perform the communication method according to any one of the possible implementations of the first aspect to the fourth aspect.

In addition, for technical effects of the communication apparatuses according to the fifth aspect to the fourteenth aspect, refer to the technical effects of the communication methods according to the first aspect to the fourth aspect. Details are not described herein again.

### BRIEF DESCRIPTION OF DRAWINGS

FIG. 1 is a diagram 1 of a relationship between a time domain resource and a link on a carrier according to an embodiment of this application;
FIG. 2a and FIG. 2b are diagrams 2 of a relationship between a time domain resource and a link on a carrier according to an embodiment of this application;
FIG. 3 is a schematic flowchart of RRM measurement according to an embodiment of this application;
FIG. 4 is a diagram of cross-link interference between filtering results in different time units according to an embodiment of this application;
FIG. 5 is a diagram of a communication scenario according to an embodiment of this application;
FIG. 6 is a diagram of an architecture of a communication system according to an embodiment of this application;
FIG. 7 is a schematic flowchart 1 of a communication method according to an embodiment of this application;
FIG. 8 is a diagram 1 of a relationship between measurement configuration information, a measurement quantity, and a measurement result according to an embodiment of this application;
FIG. 9 is a diagram 2 of a relationship between measurement configuration information, a measurement quantity, and a measurement result according to an embodiment of this application;
FIG. 10 is a diagram 1 of a relationship between filtering results in different time units according to an embodiment of this application;
FIG. 11 is a diagram of relationships between physical layer measurement results and different RRM measurement results according to an embodiment of this application;
FIG. 12 is a schematic flowchart 2 of a communication method according to an embodiment of this application;
FIG. 13 is a diagram 2 of a relationship between filtering results in different time units according to an embodiment of this application;
FIG. 14 is a diagram 1 of a structure of a communication apparatus according to an embodiment of this application; and
FIG. 15 is a diagram 2 of a structure of a communication apparatus according to an embodiment of this application.

### DESCRIPTION OF EMBODIMENTS

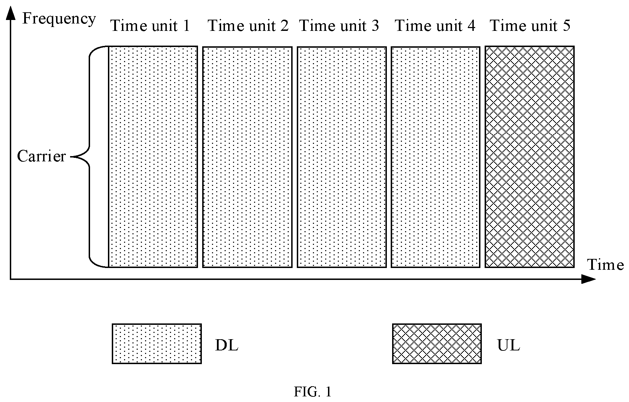

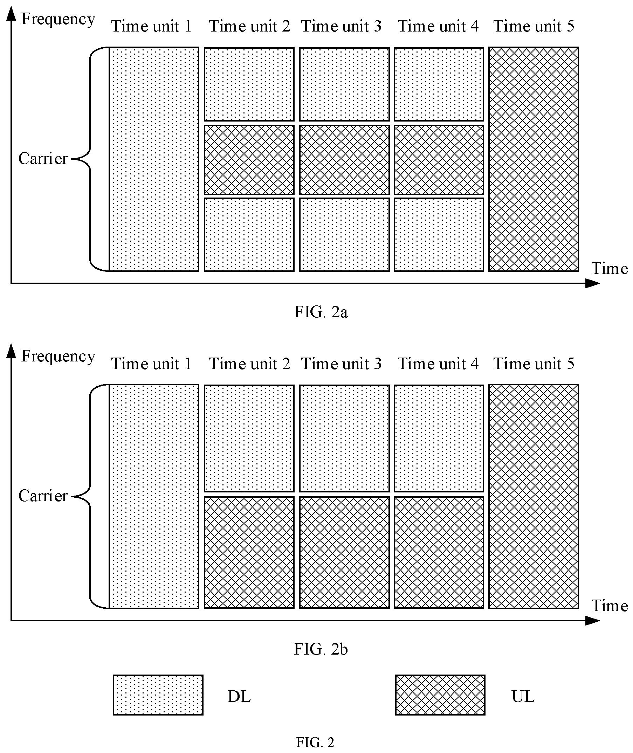

For ease of understanding, technical terms in this application are first described as follows:
1. Time unit: A time unit may include one or more slots (slots), one or more time domain symbols, such as orthogonal frequency division multiplexing (orthogonal frequency division multiplexing, OFDM) symbols, one or more mini-slots (mini-slots), one or more frames (frames) (which may also be referred to as system frames), or one or more subframes. A duration of a slot varies with different subcarrier spacings (subcarrier spacings, SCSs). A larger subcarrier spacing indicates a shorter duration of the slot, while a smaller subcarrier spacing indicates a longer duration of the slot. Similarly, a duration of a time domain symbol varies with different SCSs. A larger subcarrier spacing indicates a shorter duration of the time domain symbol, while a smaller subcarrier spacing indicates a longer duration of the time domain symbol. Similarly, a duration of one mini-slot, a duration of a system frame, and a duration of a subframe vary with different SCSs. For ease of understanding, in the following embodiments, an example in which one time unit includes one time domain symbol is used for description, and subsequent time domain symbols are all referred to as symbols for short. This is not repeated.
2. Uplink time unit: It is a time unit used for uplink transmission, and all time domain symbols in the uplink time unit are uplink symbols. For example, the uplink time unit may be an uplink symbol. For another example, the uplink time unit may be an uplink slot. It should be understood that a frequency domain resource in the uplink time unit is a frequency domain resource used for uplink transmission. In other words, the uplink time unit is used for uplink transmission. A link in the uplink time unit is an uplink (uplink, UL).
3. Downlink time unit: It is a time unit used for downlink transmission, and all time domain symbols in the downlink time unit are downlink symbols. For example, the downlink time unit may be a downlink symbol. For another example, the downlink time unit may be a downlink slot. It should be understood that a frequency domain resource in the downlink time unit is a frequency domain resource used for downlink transmission. In other words, the downlink time unit is used for downlink transmission. A link in the downlink time unit is a downlink (downlink, DL).
4. Flexible (flexible) time unit: It is a time unit that may be used for uplink transmission or downlink transmission, and a symbol in the flexible time unit is a flexible symbol. For example, the flexible time unit may be a flexible symbol.
5. Subband (subband): It may be a frequency band including a part of frequency domain resources in an activated frequency domain resource. A subband including a frequency domain resource used for uplink transmission is an uplink subband (uplink subband), and a subband including a frequency domain resource used for downlink transmission is a downlink subband (downlink subband). A link on the uplink subband may be referred to as an uplink (uplink, UL), and a link on the downlink subband may be referred to as a downlink (downlink, DL).
6. Subband full-duplex (subband full-duplex, SBFD) solution: In a time division duplex (time division duplex, TDD) system, the DL usually occupies a majority of time domain resources. As shown in FIG. 1, for example, there is one carrier, and time units include a time unit 1 to a time unit 5. All links in the time unit 1 to the time unit 4 are the DL, and a link in the time unit 5 is the UL. It can be learned that coverage between the DL and the UL is unbalanced. Compared with a frequency division duplex (frequency division duplex, FDD) system, the TDD system has fewer uplink resources and a longer uplink transmission delay. For the uplink coverage and delay problems in the TDD system, the SBFD (subband full-duplex, SBFD) solution is proposed in the 3rd generation partnership project (3rd generation partnership project, 3GPP) technical release 18 (release 18, R18). In the SBFD solution, for one carrier, a plurality of subbands may be configured in at least one time unit, and transmission directions on different subbands may be different. In other words, a plurality of subbands in at least one time unit may include at least one uplink subband and at least one downlink subband, or a link in at least one time unit may include an uplink and a downlink. With reference to the example in which the time units include the time unit 1 to the time unit 5, as shown in FIG. 2a, in some possible SBFD solutions, for one carrier, a link in the time unit 1 is the DL, three subbands are configured in each of the time unit 2 to the time unit 4, a link on one of the three subbands is the UL, links on the other two subbands are the DL, and a link in the time unit 5 is the UL. For another example, as shown in FIG. 2b, for one carrier, a link in the time unit 1 is the DL, two subbands may be configured in each of the time unit 2 to the time unit 4, a link on one of the subbands is the UL, a link on the other subband is the DL, and a link in the time unit 5 may be the UL.
7. SBFD time unit: It is a time unit configured by using the SBFD solution, or may be referred to as a time unit in which an SBFD operation (operation) is configured. For example, the SBFD time unit is a time unit in which both an uplink subband and a downlink subband are configured in frequency domain. In the SBFD time unit, uplink transmission (on the uplink subband) and downlink transmission (on the downlink subband) may be performed at a same moment. The SBFD time unit may be a slot. In this case, all symbols in the SBFD time unit are SBFD symbols; in other words, the SBFD operation is configured based on a slot. Alternatively, the SBFD time unit may include one or more SBFD symbols; in other words, the SBFD operation is configured based on a symbol.
8. Non-SBFD time unit: It is a time unit in which no SBFD operation is configured. In a scenario of downlink measurement, that is, a to-be-measured signal (which may also be referred to as a measurement reference signal) is a downlink signal, the non-SBFD time unit may include a downlink time unit and/or a flexible time unit. In other words, a flexible time unit is a non-SBFD time unit, and/or a downlink time unit is a non-SBFD time unit.

In a scenario of uplink measurement, that is, a measurement reference signal is an uplink signal, the non-SBFD time unit may include an uplink time unit and/or a flexible time unit. In other words, a flexible time unit is a non-SBFD time unit, and/or an uplink time unit is a non-SBFD time unit. In the following embodiments, downlink measurement is used as an example for description. This is not repeated subsequently.

A quantity of symbols in the non-SBFD time unit is the same as a quantity of symbols in the SBFD time unit.

It should be understood that, unless otherwise specified, all time units in the following embodiments are within a same frequency domain range, for example, time domain resources in a same bandwidth part (bandwidth part, BWP) or time domain resources in one carrier. This is not repeated subsequently.

It should be understood that the SBFD time unit and the non-SBFD time unit are different types of time units.

9. Radio resource management (radio resource management, RRM) measurement: It is a technology used to measure signal quality (also referred to as communication quality) of a terminal device to a serving cell (cell) of the terminal device and/or a cell neighboring to the serving cell. The terminal device may perform cell management based on the measured signal quality. For example, to improve service continuity of the terminal device, when the terminal device is in a connected state (connected state), the terminal device may perform cell handover based on the measured signal quality. When the terminal device is in an idle state (idle state), the terminal device may perform cell selection or reselection based on the measured signal quality. When the terminal device is in an inactive state (inactive state), the terminal device may perform cell selection or reselection based on the measured signal quality. It should be understood that the connected state may also be referred to as a radio resource control (radio resource control, RRC) connected state, the idle state may also be referred to as an RRC idle state, and the inactive state may also be referred to as an RRC inactive state.

The RRM measurement may have another name, such as signal quality measurement or channel quality measurement. The RRM measurement may also be referred to as layer 3 (layer 3, L3) measurement or higher-layer measurement. RRM measurement configuration information may have another name, such as measurement configuration information or a measurement configuration.

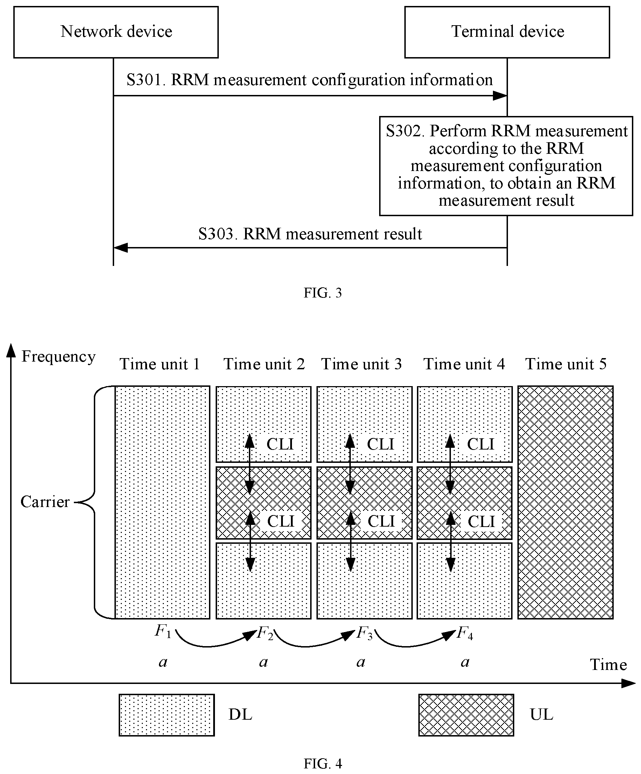

For ease of understanding, the following describes an RRM measurement procedure with reference to an example in which the terminal device is in the connected state. FIG. 3 is a schematic flowchart of RRM measurement. As shown in FIG. 3, RRM measurement includes the following S301 to S303.

S301. A network device sends RRM measurement configuration information. Correspondingly, a terminal device receives the RRM measurement configuration information.

The RRM measurement configuration information (measurement configuration) is information used to perform RRM measurement. A plurality of pieces of RRM measurement configuration information may be configured on one terminal device. In some examples, the terminal device may perform RRM measurement based on the RRM measurement configuration information. The RRM measurement configuration information is configuration information used to implement RRM measurement. In the RRM measurement configuration information, an RRM measurement information identifier, for example, a measurement identification (measurement identification), may be configured. In addition, the RRM measurement configuration information may be associated with (or corresponding to or configured with) one measurement object (measurement object) and one reporting configuration (reporting configuration), and the RRM measurement configuration information on the terminal device may be configured by the network device. The measurement object includes information such as a measurement reference signal, a measurement quantity, and an SSB measurement timing configuration (measurement timing configuration, SMTC). The reporting configuration includes a criterion (or a condition) for triggering reporting of a measurement result of RRM measurement, for example, periodic reporting or event-triggered reporting. For periodic reporting, the reporting configuration includes information indicating a reporting interval, a reporting quantity, and a measurement reporting quantity. For event-triggered reporting, the reporting configuration includes information indicating an event (for example, an event A1, an event A2, an event A3, an event A4, an event A5, or an event A6) that triggers reporting, a measurement reporting trigger quantity, and a trigger threshold (which may also be referred to as a trigger limit) corresponding to each measurement reporting trigger quantity. For example, for reference signal received power (reference signal received power, RSRP) RSRP, the trigger threshold is 100 decibel milliwatt (decibel milliwatt, dBm); for reference signal received quality (reference signal received quality, RSRQ) or a signal to interference plus noise ratio (signal to interference plus noise ratio, SINR), the trigger threshold is 60 dBm. It should be understood that the trigger thresholds herein are merely used as examples. In actual implementation, the trigger threshold may be determined based on a specific measurement quantity and scenario, and details are not described herein.

The measurement object may further include a layer 3 (layer 3, L3) filter coefficient corresponding to the measurement quantity in the measurement object. The L3 filter coefficient may also be referred to as a higher-layer filter coefficient, an L3 filtering parameter, a higher-layer filtering parameter, an L3 filtering factor, a higher-layer filtering factor, or the like.

The measurement quantity in the measurement object is a measured indicator. For example, the measurement quantity may be one or more of the following: RSRP, RSRQ, a SINR, or a received signal strength indicator (received signal strength indicator, RSSI).

The SSB may also be referred to as a synchronization signal and broadcast channel block.

The measurement reporting quantity is a reported indicator, and is at least one of measurement quantities indicated in the measurement object.

The measurement reporting trigger quantity is an indicator that triggers reporting of the measurement reporting quantity, and the measurement reporting trigger quantity is at least one of the measurement quantities indicated in the measurement object.

S302. The terminal device performs RRM measurement according to the RRM measurement configuration information, to obtain an RRM measurement result.

In S302, the RRM measurement result is a measurement result obtained through combined filtering on physical layer measurement results. The terminal device measures the measurement reference signal, such as a channel state information reference signal (channel state information-reference signal, CSI-RS) or an SSB, to obtain the physical layer measurement results, and performs filtering processing on the physical layer measurement results based on the filter coefficient, to obtain a measurement result obtained through the filtering processing, that is, the RRM measurement result.

It should be understood that RRM measurement may be performed for one or more cells, for example, a serving cell of the terminal device and a neighboring cell of the serving cell of the terminal device. RRM measurement performed for the neighboring cell of the serving cell of the terminal device is referred to as neighboring cell measurement for short below.

For example, if the terminal device is in the idle state, and an S-measure (S-Measure) criterion is configured in the RRM measurement configuration information, the terminal device may determine, based on the S-measure criterion, whether neighboring cell measurement needs to be performed. The neighboring cell measurement includes intra-frequency neighboring cell measurement, inter-frequency neighboring cell measurement, and inter-radio access technology (inter-radio access technology, Inter-RAT) measurement.

S303. The terminal device sends the RRM measurement result. Correspondingly, the network device receives the RRM measurement result.

In other words, the terminal device reports the RRM measurement result. It should be understood that the RRM measurement result reported by the terminal device may be used to determine whether the terminal device performs cell handover. In other words, the network device may determine, based on the RRM measurement result, whether the terminal device performs cell handover.

When the terminal device is in the idle state or the inactive state, the RRM measurement procedure may include S301 and S302 in FIG. 3. In addition, the terminal device may further perform cell selection or cell reselection based on the measurement result in S302.

In some scenarios, in the RRM measurement configuration information of the terminal device, filter coefficients for the SBFD time unit and the non-SBFD time unit are configured together. That is, a same filter coefficient is used to perform combined filtering processing on physical layer measurement results corresponding to a same measurement quantity in the SBFD time unit and the non-SBFD time unit, and a measurement result obtained through each filtering processing is related to a measurement result obtained through filtering processing before this filtering processing. In other words, in a scenario that includes physical layer measurement results in the SBFD time unit and the non-SBFD time unit, a measurement result obtained through an *n*^{th} filtering processing meets a relationship shown in the following formula (1), or a measurement result obtained through an *n*^{th} filtering processing is obtained according to the following formula (1), or an n^{th} filtering processing is performed according to the following formula (1): ${F}_{n} = \left(1-a\right) ∗ {F}_{n - 1} + a ∗ {M}_{n}$ (1)

*Fₙ* is a measurement result obtained through the *n*^{th} filtering processing, and *n* is an integer. For example, *n* is a positive integer greater than or equal to 1. *a* is a filter coefficient, and *a* = 1/2^{(*k*/4)}. *k* is a parameter configured by the network device. In some examples, *k* may be configured by using a higher-layer parameter such as filtering efficiency (filterCoefficient). *F*_{*n*-1} is a measurement result obtained through an (*n* - 1)^{th} filtering. *Mₙ* is a physical layer measurement result on which the *n*^{th} filtering processing is performed. For the first filtering processing, that is, when the first physical layer measurement result is received, *F*₀ = *M*₁.

It should be understood that, in embodiments of this application, the n^{th} filtering processing is an n^{th} filtering processing on a physical layer measurement result, and performing the n^{th} filtering processing is performing the n^{th} filtering processing on a physical layer measurement result, or in other words, performing filtering processing on an n^{th} physical layer measurement result. Each filtering processing may be performed on a different physical layer measurement result. For example, in the n^{th} filtering processing, the physical layer measurement result on which the filtering processing is performed may be a latest physical layer measurement result before the n^{th} filtering is performed.

It should be noted that in embodiments of this application, the physical layer measurement result may also be referred to as a measurement result from a physical layer.

The following further describes an RRM measurement principle with reference to specific physical layer measurement results and the foregoing formula (1).

As shown in the following, it is assumed that the physical layer measurement results are sequentially *X*₁, *X*₂, *X*₃, *and X*₄, *X*₁ is a physical layer measurement result in a non-SBFD time unit, and all of *X*₂, *X*₃, *and X*₄ are physical layer measurement results in SBFD time units. It is assumed that a physical layer measurement result on which the 1^{st} filtering processing is performed is *M*₁, where *M*₁ = *X*₁, a physical layer measurement result on which the 2^{nd} filtering processing is performed is *M*₂, where *M*₂ *= X*₂, a physical layer measurement result on which the 3^{rd} filtering processing is performed is *M*₃, where *M*₃ = *X*₃, and a physical layer measurement result on which the 4^{th} filtering processing is performed is *M*₄, where *M*₄ *= X*₄. Then, a measurement result obtained through the 1^{st} filtering meets a relationship shown in the following formula (2): ${F}_{1} = \left(1-a\right) ∗ {F}_{0} - 1 + a ∗ {M}_{1} = \left(1-a\right) ∗ {M}_{1} + a ∗ {M}_{1}$ (2)

A measurement result obtained through the 2^{nd} filtering meets a relationship shown in the following formula (3): ${F}_{2} = \left(1-a\right) ∗ {F}_{1} + a ∗ {M}_{2}$ (3)

A measurement result obtained through the 3^{rd} filtering meets a relationship shown in the following formula (4): ${F}_{3} = \left(1-a\right) ∗ {F}_{2} + a ∗ {M}_{3}$ (4)

A measurement result obtained through the 4^{th} filtering meets a relationship shown in the following formula (5): ${F}_{4} = \left(1-a\right) ∗ {F}_{3} + a ∗ {M}_{4}$ (5)

In this way, an RRM measurement result can be obtained, that is, a measurement result *F*₄ obtained by filtering *X*₁, *X*₂, *X*₃, *and X*₄. It can be learned that the measurement result obtained through the 4^{th} filtering is related to all of the measurement result obtained through the 1^{st} filtering to the measurement result obtained through the 3^{rd} filtering.

It is assumed that time units include a time unit 1 to a time unit 5, the time unit 1 is a non-SBFD time unit, all of the time unit 2 to the time unit 4 are SBFD time units, the time unit 5 is an uplink time unit, and physical layer measurement results in the time unit 1 to the time unit 4 are sequentially correspondingly *X*₁, *X*₂, *X*₃, and *X*₄. Then, a relationship between each time unit, each filtering result, and a filter coefficient is shown in FIG. 4.

In addition, for the SBFD time unit, due to different subbands such as an uplink subband and a downlink subband in the same time unit, signal energy in a subband may be leaked to another subband adjacent (in frequency) to the subband. In other words, energy leakage may occur between an uplink and a downlink, causing interference between the uplink and the downlink, that is, cross-link interference (cross-link interference, CLI). The following provides descriptions with reference to the time unit 1 to the time unit 5. As shown in FIG. 4, a link in the time unit 1 is an uplink, links in each of the time unit 2 to the time unit 4 include an uplink and a downlink, and a link in the time unit 5 is an uplink. In the time unit 2 to the time unit 4, CLI occurs between the uplink and the downlink.

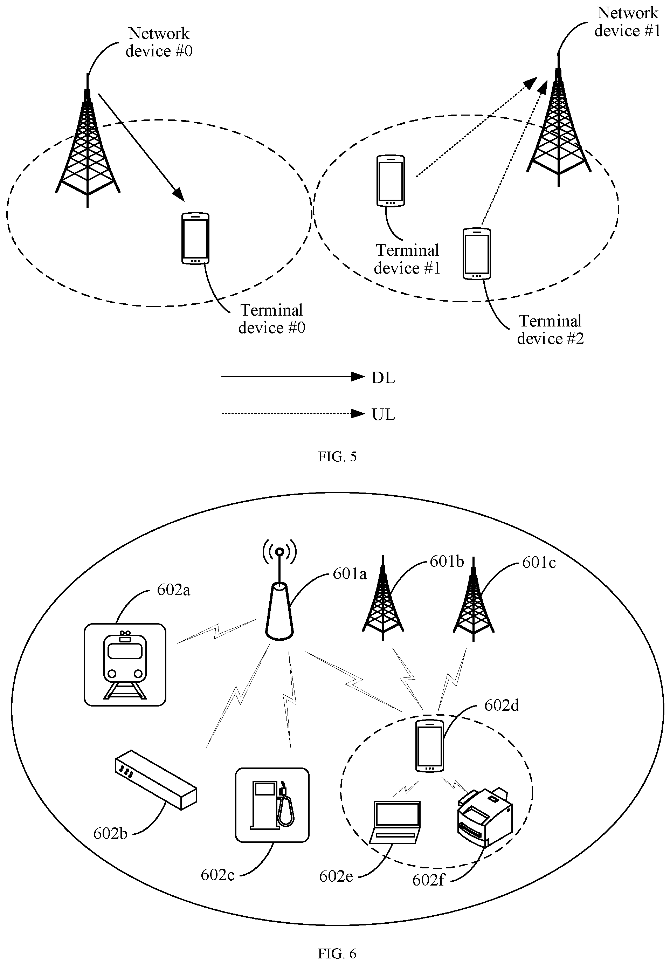

Based on interference sources, cross-link interference includes two types. The first type of cross-link interference is cross-link interference between two terminal devices, and includes one or more of the following: (1) Interference caused by an uplink signal sent by a terminal device within a coverage area of a cell to a downlink signal received by another terminal device within the coverage area of the cell. The following describes an example with reference to FIG. 5. It is assumed that a network device #0 and a network device #1 each correspond to one cell, a terminal device #0 is within a coverage area of the network device #0, and a terminal device #1 and a terminal device #2 are within a coverage area of the network device #1. Then, the cross-link interference includes one or more of the following: interference caused by a signal sent by the terminal device #1 to a signal received by the terminal device #2, or interference caused by a signal sent by the terminal device #2 to a signal received by the terminal device #1. (2) Interference caused by an uplink signal sent by a terminal device within a coverage area of a cell to a downlink signal received by another terminal device in a cell (neighboring cell) neighboring to the cell. In an example with reference to the terminal devices and the network devices provided in FIG. 5, it is assumed that a link #0 between the network device #0 and the terminal device #0 is a downlink, a link #1 between the network device #1 and the terminal device #1 is an uplink, and a link #2 between the network device #1 and the terminal device #1 is an uplink. In this case, the cross-link interference may include interference caused by a signal sent by the terminal device #1 to a signal received by the terminal device #0, that is, interference caused by the link #1 to the link #0, and/or interference caused by a signal sent by the terminal device #2 to the signal received by the terminal device #0, that is, interference caused by the link #2 to the link #0. The second type of cross-link interference is cross-link interference between network devices. In an example with reference to the terminal devices and the network devices in FIG. 5, the second type of cross-link interference may include interference caused by a downlink signal sent by the network device #0 to an uplink signal received by the network device #1, for example, interference caused by the link #0 to the link #2, or interference caused by the link #0 to the link #3. It should be understood that the second type of cross-link interference may further include interference caused by a downlink signal sent by the network device #1 to an uplink signal received by the network device #0.

In SBFD scenarios, a measurement reference signal may be distributed in an SBFD time unit and a non-SBFD time unit. With reference to the filtering principle related to the foregoing formula (1) and interference occurring between links in the SBFD time unit, it can be learned that CLI occurs in the SBFD time unit. Therefore, interference in different time units, for example, the SBFD time unit and the non-SBFD time unit, differs greatly. As a result, channel quality in the different time units, for example, the SBFD time unit and the non-SBFD time unit, differs greatly. Therefore, when an RRM measurement result is obtained through RRM measurement according to the filtering solution shown in the foregoing formula (1), an RRM measurement manner is simplistic. Consequently, an RRM feedback manner is simplistic, and application scenarios are limited.

In addition, in the foregoing filtering solution, measurement results in different types of time units affect each other, and an RRM measurement result cannot accurately reflect link quality of a terminal device.

The following describes technical solutions of this application with reference to accompanying drawings.

The technical solutions in embodiments of this application may be applied to various communication systems, for example, a wireless fidelity (wireless fidelity, Wi-Fi) system, a vehicle to everything (vehicle to everything, V2X) communication system, a device-to-device (device-to-device, D2D) communication system, an internet of vehicles communication system, a 4th generation (4th generation, 4G) mobile communication system, such as a long term evolution (long term evolution, LTE) system or a worldwide interoperability for microwave access (worldwide interoperability for microwave access, WiMAX) communication system, a 5th generation (5th generation, 5G) mobile communication system, such as a new radio (new radio, NR) system, and a future communication system, such as a 6th generation (6th generation, 6G) mobile communication system.

Aspects, embodiments, or features are presented in this application by describing a system that may include a plurality of devices, components, modules, or the like. It should be appreciated and understood that, each system may include another device, component, module, or the like, and/or may not include all devices, components, modules, or the like discussed with reference to the accompanying drawings. In addition, a combination of these schemes may alternatively be used.

In addition, in embodiments of this application, the term such as "example" or "for example" is used to represent giving an example, an illustration, or a description. Any embodiment or design scheme described as an "example" in this application should not be explained as being more preferred or having more advantages than another embodiment or design scheme. To be precise, the term "example" is intended to present a concept in a specific manner.

First, in this application, "indicate" may include "directly indicate" and "indirectly indicate". When a piece of "information" is described as indicating A, the information may directly indicate A or indirectly indicate A, but it does not represent that the information definitely carries A.

Information indicated by a piece of information is referred to as to-be-indicated information. In a specific implementation process, the to-be-indicated information may be indicated in a plurality of manners, for example, but not limited to, directly indicating the to-be-indicated information, for example, indicating the to-be-indicated information or an index of the to-be-indicated information. Alternatively, the to-be-indicated information may be indirectly indicated by indicating other information, where there is an association relationship between the other information and the to-be-indicated information. Alternatively, only a part of the to-be-indicated information may be indicated, while another part of the to-be-indicated information is known or pre-agreed on. For example, specific information may be indicated by using an arrangement sequence, agreed on in advance (for example, stipulated in a protocol), of various pieces of information, to reduce indication overheads to some extent. In addition, common parts of various pieces of information may be further identified and indicated together, to reduce indication overheads caused by indicating identical information separately.

Furthermore, specific indication manners may alternatively be various existing indication manners, for example, but not limited to, the foregoing indication manners and various combinations thereof. For details of the indication manners, refer to conventional technologies, which are not described in this specification. It can be learned from the foregoing descriptions that, for example, when a plurality of pieces of information of a same type need to be indicated, different information may be indicated in different manners. In a specific implementation process, a required indication manner may be selected based on a specific requirement. The selected indication manner is not limited in embodiments of this application. In this way, the indication manner in embodiments of this application should be understood as covering various methods that can enable a to-be-indicated party to learn of to-be-indicated information.

The to-be-indicated information may be sent as a whole, or may be divided into a plurality of pieces of sub-information to be sent separately, where sending periods and/or sending occasions of these pieces of sub-information may be the same or different. A specific sending method is not limited in this application. The sending periods and/or the sending occasions of these pieces of sub-information may be predefined, for example, predefined according to a protocol, or may be configured by a transmitting end device by sending configuration information to a receiving end device. For example, the configuration information may include but is not limited to one or a combination of at least two of radio resource control (radio resource control, RRC) signaling, medium access control (medium access control, MAC) layer signaling, and physical layer signaling. The MAC layer signaling includes, for example, a MAC control element (control element, CE). The physical (physical, PHY) layer signaling includes, for example, downlink control information (downlink control information, DCI).

Second, the "first", "second", and various numbering in the following embodiments are not intended to limit the scope of embodiments of this application, but merely used for distinguishing for ease of description, for example, distinguishing between different indication information.

Third, the "preset", "predefine", or "preconfigure" may be implemented by prestoring corresponding code or a corresponding table in a device (for example, including terminal and network devices) or in another manner in which related information may be indicated, or may be pre-stipulated in a protocol. A specific implementation is not limited in this application. The "store" may be storing in one or more memories. The one or more memories may be separately disposed, or may be integrated into an encoder or a decoder, a processor, or a communication apparatus. Alternatively, the one or more memories may be partly separately disposed, and partly integrated into a decoder, a processor, or a communication apparatus. A type of the memory may be a storage medium in any form. This is not limited in this application.

Network architectures and service scenarios described in embodiments of this application are intended to describe the technical solutions in embodiments of this application more clearly, and do not constitute limitations on the technical solutions provided in embodiments of this application. A person of ordinary skill in the art may know that, with the evolution of network architectures and the emergence of new service scenarios, the technical solutions provided in embodiments of this application are also applicable to similar technical problems.

Network architectures and service scenarios described in embodiments of this application are intended to describe the technical solutions in embodiments of this application more clearly, and do not constitute limitations on the technical solutions provided in embodiments of this application. A person of ordinary skill in the art may know that, with the evolution of network architectures and the emergence of new service scenarios, the technical solutions provided in embodiments of this application are also applicable to similar technical problems.

For ease of understanding embodiments of this application, a communication system for embodiments of this application is first described in detail by using a communication system shown in FIG. 6 as an example. For example, FIG. 6 is a diagram of an architecture of a communication system to which a communication method according to embodiments of this application is applicable.

As shown in FIG. 6, the communication system includes network devices (network device 601a to a network device 601c) and terminal devices (network device 602a to a network device 602f).

The terminal devices may be connected to the network devices in a wireless manner, and the network devices may be connected to a core network (not shown in FIG. 6) in a wired or wireless manner.

Optionally, any two network devices may exchange information with each other, and any two terminal devices may exchange information with each other.

The network devices may exchange information with the terminal devices.

The terminal device may be a terminal having a transceiver function, or may be a chip or chip system disposed in the terminal. The terminal device may also be referred to as user equipment (user equipment, UE), an access terminal, a subscriber unit (subscriber unit), a subscriber station, a mobile station (mobile station, MS), a mobile console, a remote station, a remote terminal, a mobile device, a user terminal, a terminal, a wireless communication device, a user agent, or a user apparatus. The terminal device in embodiments of this application may be a mobile phone (mobile phone), a cellular phone (cellular phone), a smartphone (smartphone), a tablet computer (Pad), a wireless data card, a personal digital assistant (personal digital assistant, PDA), a wireless modem (modem), a handheld device (handset), a laptop computer (laptop computer), a machine-type communication (machine-type communication, MTC) terminal, a computer having a wireless transceiver function, a virtual reality (virtual reality, VR) terminal, an augmented reality (augmented reality, AR) terminal, a smart home device (for example, a refrigerator, a television, an air conditioner, or an electricity meter), a smart robot, a robot arm, a workshop device, a wireless terminal in autonomous driving, a wireless terminal in industrial control (industrial control), a wireless terminal in self-driving (self-driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a vehicle-mounted terminal, a road side unit (road side unit, RSU) having a terminal function, a flight device (for example, a smart robot, a hot-air balloon, an uncrewed aerial vehicle, or an airplane), or the like. The terminal in this application may alternatively be a vehicle-mounted module, an in-vehicle module, a vehicle-mounted component, a vehicle-mounted chip, or an on-board unit that is built in a vehicle as one or more components or units. The terminal device may alternatively be another device having a terminal function. For example, the terminal device may alternatively be a device that implements a terminal function in D2D communication. A device form of the terminal device is not limited in embodiments of this application, which may be an apparatus configured to implement a function of a terminal, or may be an apparatus that can support the terminal in implementing the function, for example, a chip system. The apparatus may be installed in the terminal or used in combination with the terminal. In embodiments of this application, the chip system may include a chip, or may include a chip and another discrete component.

The network device may be a device having a wireless transceiver function, or may be a chip or chip system disposed in the device, and is located in an access network (access network, AN) of the communication system, to provide an access service for terminal devices. For example, the network device may be referred to as a radio access network (radio access network, RAN) device, and may be specifically an access network device in a next-generation mobile communication system such as 6G, for example, a 6G base station, or the network device may be named in other manners in the next-generation mobile communication system, which all fall within the protection scope of embodiments of this application, and are not limited in this application. Alternatively, the network device may include a gNB in 5G such as a new radio (new radio, NR) system, or an antenna panel or an antenna panel group (including a plurality of antenna panels) of a base station in 5G, or may be a network node that forms a gNB, a transmission point (a transmission and reception point, TRP, or a transmission point, TP), or a transmission measurement function (transmission measurement function, TMF), for example, a central unit (central unit, CU), a distributed unit (distributed unit, DU), a CU-control plane (control plane, CP), a CU-user plane (user plane, UP), a radio unit (radio unit, RU), an RSU having a base station function, a wired access gateway, or a 5G core network element. Alternatively, the network device may include an access point (access point, AP) in a wireless fidelity (wireless fidelity, Wi-Fi) system, a wireless relay node, a wireless backhaul node, macro base stations in various forms, a micro base station (also referred to as a small cell), a relay station, an access point, a wearable device, a vehicle-mounted device, or the like.

The CU and the DU may be separately disposed, or may be included in a same network element, for example, a baseband unit (baseband unit, BBU). The RU may be included in a radio frequency device or a radio frequency unit, for example, a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein. In different systems, the CU (or the CU-CP and the CU-UP), the DU, or the RU may have different names, but a person skilled in the art may understand their meanings. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module. A form of the network device is not limited in embodiments of this application. An apparatus configured to implement a function of the network device may be the network device, or may be an apparatus that can support the network device in implementing the function, for example, a chip system. The apparatus may be installed in the network device or used in combination with the network device.

It should be noted that the communication method provided in embodiments of this application is applicable between any two devices shown in FIG. 6, for example, between terminal devices, between network devices, and between a terminal device and a network device. For specific implementations, refer to the following method embodiments. Details are not described herein.

It should be noted that the solutions in embodiments of this application may also be applied to another communication system, and a corresponding name may be replaced with a name of a corresponding function in the another communication system.

It should be understood that FIG. 6 is merely a simplified diagram showing an example for ease of understanding. The communication system may further include other network devices and/or other terminal devices not shown in FIG. 6.

In embodiments of this application, to resolve the problem of limited application scenarios of the RRM measurement solution, in an embodiment, a communication method is provided. In the communication method, a network device may send RRM measurement configuration information to a terminal device, and the measurement configuration information indicates to separately perform filtering processing for different types of time units, for example, separately perform filtering processing on a physical layer measurement result in an SBFD time unit, and/or separately perform filtering processing on a physical layer measurement result in a non-SBFD time unit. In this way, physical layer measurement results in the different types of time units can be separately filtered based on the types of the time units, so that RRM measurement can be more flexible and adapt to more scenarios.

In some other embodiments, a communication method is provided. In the communication method, a network device may send RRM measurement configuration information to a terminal device, and the RRM measurement configuration information indicates that filter coefficients are separately configured for different types of time units. In this way, filtering processing can be performed based on the filter coefficients in the different types of time units, so that RRM measurement can be more flexible and adapt to more scenarios.

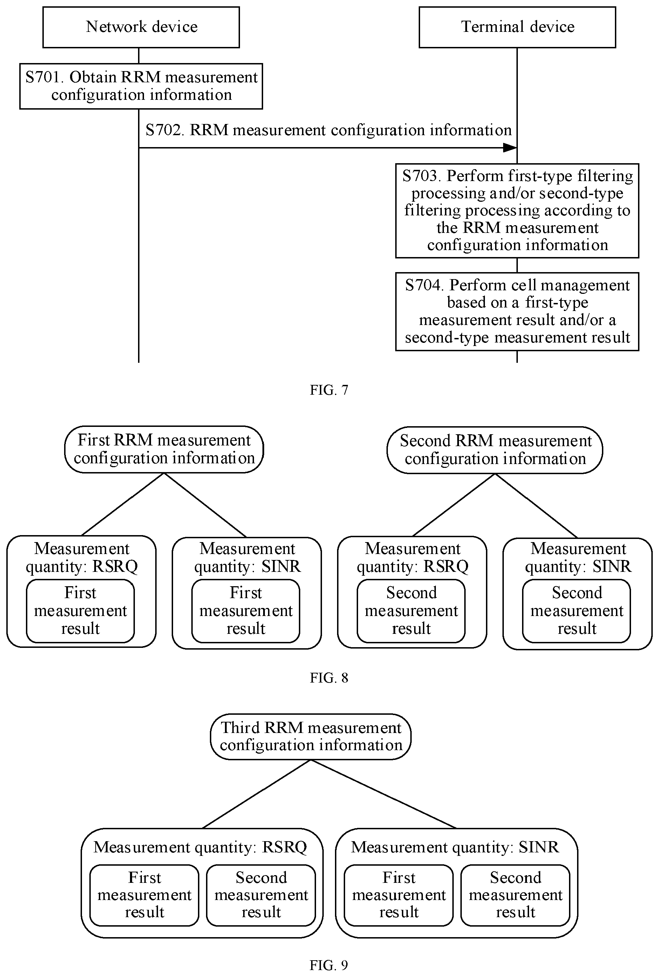

The following specifically describes, with reference to FIG. 7 to FIG. 13, the communication methods provided in embodiments of this application.

In some embodiments, for different types of time units, filtering processing may be separately performed on a physical layer measurement result in an SBFD time unit, and/or filtering processing may be separately performed on a physical layer measurement result in a non-SBFD time unit. The following provides descriptions with reference to FIG. 7. FIG. 7 is a schematic flowchart 1 of a communication method according to an embodiment of this application. The communication method is applicable to communication between any two nodes shown in FIG. 6.

As shown in FIG. 7, the communication method includes the following steps.

S701. A network device obtains RRM measurement configuration information.

The RRM measurement configuration information is information used to perform RRM measurement. The RRM measurement configuration information indicates to perform first-type filtering processing and/or second-type filtering processing. There is a correspondence between the first-type filtering processing and an SBFD time unit, and there is a correspondence between the second-type filtering processing and a non-SBFD time unit. The first-type filtering processing is filtering processing on a physical layer measurement result in the SBFD time unit, and the second-type filtering processing is filtering processing on a physical layer measurement result in the non-SBFD time unit.

In a scenario of downlink measurement, that is, a measurement reference signal is a downlink signal, the non-SBFD time unit may include a flexible time unit or a downlink time unit. In other words, in a downlink measurement scenario, both a flexible time unit and a downlink time unit may be referred to as non-SBFD time units.

In this embodiment of this application, the physical layer measurement result in the SBFD time unit may also be referred to as a physical layer measurement result corresponding to the SBFD time unit, which is a physical layer measurement result obtained by measuring a reference signal carried in the SBFD time unit, such as a CSI-RS or an SSB; and the physical layer measurement result in the non-SBFD time unit may also be a physical layer measurement result corresponding to the non-SBFD time unit, which is obtained by measuring a reference signal in the non-SBFD time unit, for example, a CSI-RS or an SSB. This is not repeated subsequently.

The correspondence between the first-type filtering processing and the SBFD time unit means that the first-type filtering processing is performed on the physical layer measurement result in the SBFD time unit.

The correspondence between the second-type filtering processing and the non-SBFD time unit means that the second-type filtering processing is performed on the physical layer measurement result in the non-SBFD time unit.

The first-type filtering processing and the second-type filtering processing are L3 filtering or higher-layer filtering.

In this embodiment of this application, that the RRM measurement configuration information indicates to perform first-type filtering processing and/or second-type filtering processing includes one of the following Case 1 to Case 3. The following separately describes the different cases.

Case 1: The RRM measurement configuration information indicates to perform first-type filtering processing, that is, the RRM measurement configuration information indicates to separately perform first-type filtering processing on the physical layer measurement result in the SBFD time unit.

In a possible implementation solution, the RRM measurement configuration information may include first RRM measurement configuration information. The first RRM measurement configuration information is associated with the physical layer measurement result in the SBFD time unit.

That the first RRM measurement configuration information is associated with the physical layer measurement result in the SBFD time unit means that filtering processing is performed on the physical layer measurement result in the SBFD time unit by using a filter coefficient configured in the first RRM measurement configuration information.

In this way, a terminal device can separately perform filtering processing on the physical layer measurement result in the SBFD time unit.

In a possible implementation solution, the first RRM measurement configuration information is associated with a first measurement result corresponding to a first measurement quantity, and the first measurement result is obtained through first-type filtering processing on a physical layer measurement result corresponding to the first measurement quantity in an SBFD time unit in at least one time unit.

In this way, the network device configures a measurement quantity, for example, the first measurement quantity, so that the terminal device can perform filtering processing based on the measurement quantity configured by the network device, thereby improving flexibility of RRM measurement.

The first measurement quantity may be one of the following: a SINR, RSRQ, or an RSSI. In this way, the first measurement quantity can be configured based on an actual scenario, thereby further improving flexibility of RRM measurement.

It should be understood that the first RRM measurement configuration information may be associated with a plurality of measurement quantities. For example, the measurement quantity associated with the first RRM measurement configuration information may include one or more of the following: the SINR, the RSRQ, or the RSSI.

In a possible implementation solution, the first RRM measurement configuration information may include information indicating a first filter coefficient. The first filter coefficient is used to obtain the first measurement result.

It should be understood that when the first RRM measurement configuration information is associated with a plurality of measurement quantities, different measurement quantities may correspond to different filter coefficients. In this case, each measurement quantity combined with the SBFD time unit corresponds to one first filter coefficient. For example, the measurement quantity associated with the first RRM measurement configuration information includes the SINR, the RSRQ, and the RSSI. The measurement quantities, the SBFD time unit, and filter coefficients meet correspondences shown in Table 1:

**Table 1**

| Time unit | Measurement quantity | Filter coefficient |
|---|---|---|
| SBFD time unit | SINR | First filter coefficient #1 |
| SBFD time unit | RSRQ | First filter coefficient #2 |
| SBFD time unit | RSSI | First filter coefficient #3 |

In the foregoing Table 1, each row represents one correspondence between the SBFD time unit, the measurement quantity, and the filter coefficient. The measurement quantities corresponding to the SBFD time unit are merely used as examples. In actual implementation, there may be other correspondences, and details are not described herein.

In some possible implementation solutions, the first RRM measurement configuration information may include a correspondence between the SBFD time unit, the measurement quantity, and the filter coefficient, for example, the correspondences shown in Table 1.

The first RRM measurement configuration information may directly indicate the first filter coefficient associated with the physical layer measurement result in the SBFD time unit. In this case, the RRM measurement configuration information may include the first filter coefficient. Alternatively, the RRM measurement configuration information may indirectly indicate the first filter coefficient associated with the physical layer measurement result in the SBFD time unit. In this case, the RRM measurement configuration information may include an index of the first filter coefficient. Alternatively, the RRM measurement configuration information may include other information corresponding to the first filter coefficient. Details are not described herein.

It should be understood that the foregoing first measurement quantity is merely used as an example. In actual implementation, the first measurement quantity may alternatively be another possible measurement quantity, for example, RSRP. In Case 1, the RRM measurement configuration information may indicate to perform first-type filtering processing only on the physical layer measurement result in the SBFD time unit.

Case 2: The RRM measurement configuration information indicates to perform second-type filtering processing, that is, the RRM measurement configuration information indicates to separately perform second-type filtering processing on the physical layer measurement result in the non-SBFD time unit.

In a possible implementation solution, the RRM measurement configuration information includes second RRM measurement configuration information. The second RRM measurement configuration information is associated with the physical layer measurement result in the non-SBFD time unit.

In this way, the terminal device can separately perform filtering processing on the physical layer measurement result in the non-SBFD time unit.

That the second RRM measurement configuration information is associated with the physical layer measurement result in the non-SBFD time unit means that filtering processing is performed on the physical layer measurement result in the non-SBFD time unit by using a filter coefficient configured in the second RRM measurement configuration information.

In a possible implementation solution, the second RRM measurement configuration information is associated with a second measurement result corresponding to a second measurement quantity, and the second measurement result is obtained through second-type filtering processing on a physical layer measurement result corresponding to the second measurement quantity in a non-SBFD time unit in the at least one time unit.

In this way, the network device configures a measurement quantity, for example, the second measurement quantity, so that the terminal device can perform filtering processing based on the measurement quantity configured by the network device, thereby improving flexibility of RRM measurement.

The second measurement quantity is one of the following: the SINR, the RSRQ, or the RSSI. In this way, a measurement quantity can be configured based on an actual scenario, thereby further improving flexibility of RRM measurement.

The second RRM measurement configuration information may be associated with a plurality of measurement quantities. For example, the measurement quantity associated with the second RRM measurement configuration information may include one or more of the following: the SINR, the RSRQ, or the RSSI.

In a possible design solution, the RRM measurement configuration information, for example, the second RRM measurement configuration information, may include information indicating a second filter coefficient, and the second filter coefficient is used to obtain the second measurement result.

It should be understood that when the second RRM measurement configuration information is associated with a plurality of measurement quantities, different measurement quantities may correspond to different filter coefficients. In this case, each measurement quantity combined with the non-SBFD time unit corresponds to one first filter coefficient. For example, the measurement quantity associated with the second RRM measurement configuration information includes the SINR, the RSRQ, and the RSSI. The measurement quantities, the non-SBFD time unit, and filter coefficients meet correspondences shown in Table 2:

**Table 2**

| Time unit | Measurement quantity | Filter coefficient |
|---|---|---|
| Non-SBFD time unit | SINR | Second filter coefficient #1 |
| Non-SBFD time unit | RSRQ | Second filter coefficient #2 |
| Non-SBFD time unit | RSSI | Second filter coefficient #3 |

In the foregoing Table 2, each row represents one correspondence between the non-SBFD time unit, the measurement quantity, and the filter coefficient. The measurement quantities corresponding to the non-SBFD time unit are merely used as examples. In actual implementation, there may be other correspondences, and details are not described herein.

In some possible implementation solutions, the second RRM measurement configuration information may include a correspondence between the non-SBFD time unit, the measurement quantity, and the filter coefficient, for example, the correspondences shown in Table 2.

The RRM measurement configuration information, for example, the second RRM measurement configuration information, may directly indicate the second filter coefficient associated with the physical layer measurement result in the non-SBFD time unit. In this case, the RRM measurement configuration information may include the second filter coefficient. Alternatively, the RRM measurement configuration information may indirectly indicate the second filter coefficient associated with the physical layer measurement result in the non-SBFD time unit. In this case, the RRM measurement configuration information may include an index of the second filter coefficient. Alternatively, the RRM measurement configuration information may include other information corresponding to the second filter coefficient. Details are not described herein.

It should be understood that the foregoing second measurement quantity is merely used as an example. In actual implementation, the second measurement quantity may alternatively be another possible measurement quantity, for example, the RSRP. In Case 2, the RRM measurement configuration information may indicate to perform second-type filtering processing only on the physical layer measurement result in the non-SBFD time unit.

In addition, in Table 1 and Table 2, any two filter coefficients may be the same or different. For example, the first filter coefficient #1 and the second filter coefficient #3 may be the same or different.

Case 3: The RRM measurement configuration information indicates to perform first-type filtering processing and second-type filtering processing, that is, separately perform first-type filtering processing on the physical layer measurement result in the SBFD time unit, and separately perform second-type filtering processing on the physical layer measurement result in the non-SBFD time unit.

Case 3.1: The RRM measurement configuration information includes first RRM measurement configuration information and second RRM measurement configuration information. In this case, for the first RRM measurement configuration information, refer to related descriptions in Case 1, and for the second RRM measurement configuration information, refer to related descriptions in Case 2.

The following uses an example to describe the RRM measurement configuration information. As shown in FIG. 8, the RRM measurement configuration information includes first RRM measurement configuration information and second RRM measurement configuration information. The first RRM measurement configuration information is associated with a first measurement result corresponding to RSRQ and a first measurement result corresponding to a SINR. The second RRM measurement configuration information is associated with a second measurement result corresponding to the RSRQ and a second measurement result associated with the SINR.

Case 3.2: The RRM measurement configuration information includes third RRM measurement configuration information. The third RRM measurement configuration information is associated with the physical layer measurement result in the SBFD time unit and the physical layer measurement result in the non-SBFD time unit. In this case, for an implementation principle of the third RRM measurement configuration information, refer to related descriptions of the first RRM measurement configuration information and the second RRM measurement configuration information. In this way, a quantity of pieces of RRM measurement configuration information can be reduced, to reduce resource overheads.

In a possible implementation solution, the third RRM measurement configuration information is associated with a first measurement result corresponding to a first measurement quantity and a second measurement result corresponding to a second measurement quantity. The first measurement result is obtained through first-type filtering processing on a physical layer measurement result corresponding to the first measurement quantity in an SBFD time unit in a plurality of time units. The second measurement result is obtained through second-type filtering processing on a physical layer measurement result corresponding to the second measurement quantity in a non-SBFD time unit in the plurality of time units.

The third RRM measurement configuration information may be associated with a result obtained through first-type filtering processing on a physical layer measurement result corresponding to each of a plurality of measurement quantities in the SBFD time unit, and a result obtained through second-type filtering processing on a physical layer measurement result corresponding to each measurement quantity in the non-SBFD time unit.

The following uses an example to describe an association relationship between the third RRM measurement configuration information and the measurement quantities, the first measurement result, and the second measurement result. As shown in FIG. 9, the third RRM measurement configuration information is associated with a first measurement result corresponding to RSRQ and a second measurement result corresponding to the RSRQ, and a first measurement result corresponding to a SINR and a second measurement result corresponding to the SINR.

In a possible implementation solution, the third RRM measurement configuration information includes information indicating a first filter coefficient and a second filter coefficient. The first filter coefficient is used to obtain a first-type measurement result, for example, the first measurement result. The second filter coefficient is used to obtain a second-type measurement result, for example, the second measurement result.

In this way, different filter coefficients can be configured based on interference between different links, so that an RRM measurement result can be more accurate.

It should be understood that the RRM measurement configuration information may further include other RRM configuration information, for example, existing information. The first filter coefficient and the second filter coefficient may be the same or different. In this embodiment of this application, the measurement quantity may also be understood as a measured indicator.

S702. The network device sends the RRM measurement configuration information. Correspondingly, the terminal device receives the RRM measurement configuration information.

The fourth RRM measurement configuration information may be carried in higher-layer signaling. For example, the RRM measurement configuration information may be carried in RRC signaling or a MAC-CE.

It should be understood that the "send" in the "network device sends the RRM measurement configuration information" may also be understood as "output", or including a meaning of "output", and the sending the RRM measurement configuration information may also be understood as outputting the RRM measurement configuration information. That the network device sends the RRM measurement configuration information may include a process in which the network device processes the RRM measurement configuration information by using a higher-layer protocol, sends the RRM measurement configuration information to a physical layer for modulation, and transmits a modulated signal. For example, in an O-RAN scenario, that the network device sends the RRM measurement configuration information may include a process in which a CU sends the RRM measurement configuration information to a DU, and the DU sends the RRM measurement configuration information to an RU.

S703. The terminal device performs first-type filtering processing and/or second-type filtering processing according to the RRM measurement configuration information.

The following separately describes different manners with reference to different cases of the RRM measurement configuration information.

Manner 1: When the RRM measurement configuration information is shown in the foregoing Case 1, S303 may include: The terminal device performs first-type filtering processing according to the RRM measurement configuration information to obtain a first-type measurement result.

That the terminal device performs first-type filtering processing according to the RRM measurement configuration information to obtain the first-type measurement result means that the terminal device performs first-type filtering processing on the physical layer measurement result in the SBFD time unit according to the RRM measurement configuration information, that is, separately performs first-type filtering processing on the physical layer measurement result in the SBFD time unit, to obtain the first-type measurement result. It should be understood that in this case, the terminal device may perform first-type filtering processing only on the physical layer measurement result in the SBFD time unit.

In this way, filtering processing can be separately performed on the physical layer measurement result in the SBFD time unit.

When the RRM measurement configuration information is shown in the foregoing Case 1, the terminal device performs first-type filtering processing according to the RRM measurement configuration information. In other words, the terminal device performs first-type filtering processing based on the first RRM measurement configuration information. To be specific, the terminal device performs first-type filtering processing on the physical layer measurement result in the SBFD time unit based on the first RRM measurement configuration information.

It should be understood that, the first-type measurement result is a result obtained by filtering the physical layer measurement result in the SBFD time unit, and the first-type measurement result may include a result obtained by filtering a physical layer measurement result corresponding to each measurement quantity in the SBFD time unit, that is, a first measurement result corresponding to each measurement quantity. If the first RRM measurement configuration information is associated with the first measurement result corresponding to the first measurement quantity, the first measurement result belongs to the first-type filtering processing result.

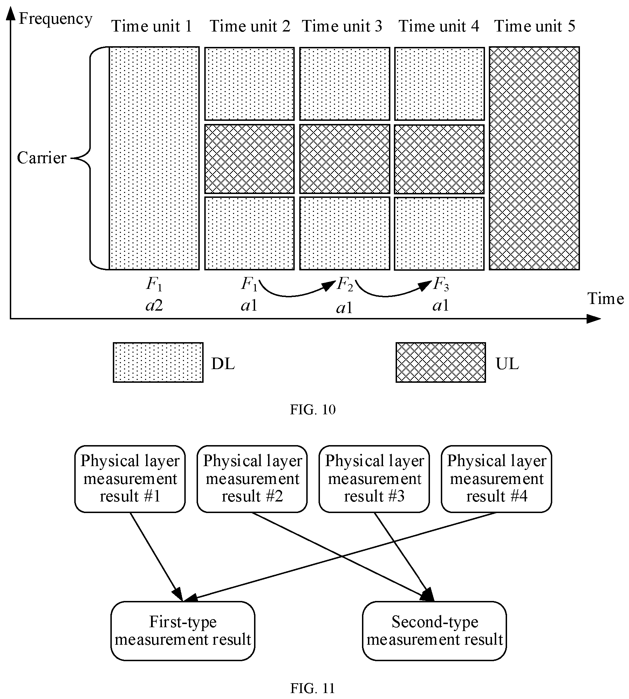

For ease of understanding, the following provides descriptions by using an example with reference to a time unit 1 to a time unit 5 shown in FIG. 10.

It is assumed that the time unit 1 is a non-SBFD time unit, all of the time unit 2 to the time unit 4 are SBFD time units, the time unit 5 is an uplink time unit, the first filter coefficient indicated in the RRM measurement configuration information is *a*1 , and physical layer measurement results in the time unit 1 to the time unit 4 are sequentially correspondingly *X*₁, *X*₁, *X*₃, and *X*₄. Then, the terminal device filters the physical layer measurement results in the time unit 2 to the time unit 4 by using the first filter coefficient *a*1. It is assumed that physical layer measurement results in the SBFD time units on which the 1^{st} filtering processing to the 3^{rd} filtering processing are performed are represented by *M*₁, *M*₂, and *M*₃ sequentially. Then, for the SBFD time units, the first filter coefficient *a*1 is used for filtering in the 1^{st} filtering processing, and a measurement result *F*₁ obtained through the 1^{st} filtering processing meets a relationship shown in the following formula (6): ${F}_{1} = \left(1-a1\right) ∗ {F}_{0} + a 1 ∗ {M}_{1}$ (6)

*F*₀ = *M*₁. When a physical layer measurement result on which the 1^{st} filtering processing is performed is the physical layer measurement result *X*₂ in the time unit 2, *M*₁ *= X*₂, that is, *M*₁ is equal to the physical layer measurement result in the time unit 2, and *F*₀ = X2, that is, *F*₀ is equal to the physical layer measurement result in the time unit 2.

For the SBFD time units, the first filter coefficient *a*1 is used for filtering in the 2^{nd} filtering processing, and a measurement result *F*₂ obtained through the 2^{nd} filtering processing meets a relationship shown in the following formula (7): ${F}_{2} = \left(1-a1\right) ∗ {F}_{1} + a 1 ∗ {M}_{2}$ (7)

When a physical layer measurement result on which the 2^{nd} filtering processing is performed is the physical layer measurement result *X*₃ in the time unit 3, *M*₂ = *X*₃, that is, *M*₂ is equal to the physical layer measurement result in the time unit 3.

For the SBFD time units, the first filter coefficient *a*1 is used for filtering in the 3^{rd} filtering processing, and a result *F*₃ obtained through the 3^{rd} filtering processing meets a relationship shown in the following formula (8): ${F}_{3} = \left(1-a1\right) ∗ {F}_{2} + a 1 ∗ {M}_{3}$ (8)

When a physical layer measurement result on which the 3^{rd} filtering processing is performed is the physical layer measurement result *X*₄ in the time unit 4, *M*₃ *= X*₄, that is, *M*₄ is equal to the physical layer measurement result in the time unit 4.

With reference to related descriptions of the foregoing formula (6) to formula (8), it can be learned that the first-type measurement result is the measurement result *F*₃ obtained by filtering the physical layer measurement results in the time unit 2 to the time unit 4.

Manner 2: When the RRM measurement configuration information is shown in the foregoing Case 2, S303 may include: The terminal device performs second-type filtering processing according to the RRM measurement configuration information to obtain a second-type measurement result.

That the terminal device performs second-type filtering processing according to the RRM measurement configuration information means that the terminal device performs second-type filtering processing on the physical layer measurement result in the non-SBFD time unit according to the RRM measurement configuration information, that is, separately performs second-type filtering processing on the physical layer measurement result in the non-SBFD time unit, to obtain the second-type measurement result.

In this way, filtering processing can be separately performed on the physical layer measurement result in the non-SBFD time unit.

When the RRM measurement configuration information is shown in the foregoing Case 2, the terminal device performs second-type filtering processing according to the RRM measurement configuration information. In other words, the terminal device performs second-type filtering processing according to the second RRM measurement configuration information. To be specific, the terminal device performs second-type filtering processing on the physical layer measurement result in the non-SBFD time unit according to the second RRM measurement configuration information.

It should be understood that, the second-type measurement result is a result obtained by filtering the physical layer measurement result in the non-SBFD time unit, and the second-type measurement result may include a result obtained by filtering a physical layer measurement result corresponding to each measurement quantity in the non-SBFD time unit, that is, a second measurement result corresponding to each measurement quantity. If the second RRM measurement configuration information is associated with the second measurement result corresponding to the first measurement quantity, the second measurement result belongs to the second-type filtering processing result.

The following provides descriptions by using an example with reference to the time unit 1 to the time unit 5.

It is assumed that the time unit 1 is a non-SBFD time unit, all of the time unit 2 to the time unit 4 are SBFD time units, the time unit 5 is an uplink time unit, the second filter coefficient is *a*2, and physical layer measurement results in the time unit 1 to the time unit 4 are sequentially correspondingly *X*₁, *X*₂, *X*₃, and *X*₄. Then, the terminal device filters the physical layer measurement result in the time unit 1 by using the second filter coefficient *a*2, to obtain an RRM measurement result.

In this case, the non-SBFD time unit is the time unit 1, and a measurement result *F*₁ obtained by filtering the physical layer measurement result in the time unit 1 meets a relationship shown in the following formula (9): ${F}_{1} = \left(1-a2\right) ∗ {F}_{0} + a 2 ∗ {M}_{1}$ (9)

When a physical layer measurement result on which the 1^{st} filtering processing is performed is the physical layer measurement result *X*₁ in the time unit 1, *M*₁ = *X*₁ and *F*₀ = *M*₁, that is, *F*₀ is equal to the physical layer measurement result in the time unit 1. The second-type measurement result is the measurement result *F*₁ obtained by filtering the physical layer measurement result in the time unit 1.

It should be understood that when filtering processing is performed multiple times on physical layer measurement results in non-SBFD time units, a principle of an n^{th} filtering processing on a physical layer measurement result in a non-SBFD time unit is similar to a principle of an n^{th} filtering processing on a physical layer measurement result in an SBFD time unit, and details are not described herein again.

Manner 3: When the RRM measurement configuration information is shown in the foregoing Case 3, S303 may include: The terminal device performs first-type filtering processing and second-type filtering processing according to the RRM measurement configuration information. To be specific, the terminal device performs first-type filtering processing according to the RRM measurement configuration information, and the terminal device performs second-type filtering processing according to the RRM measurement configuration information.

In Case 3.2, that the terminal device performs first-type filtering processing and/or second-type filtering processing according to the RRM measurement configuration information includes: The terminal device performs first-type filtering processing on a physical layer measurement result in an SBFD time unit in a plurality of time units according to the third RRM measurement configuration information, to obtain a first-type measurement result; and the terminal device performs second-type filtering processing on a physical layer measurement result in a non-SBFD time unit in the plurality of time units according to the third RRM measurement configuration information, to obtain a second-type measurement result. In this way, the terminal device can separately perform filtering processing on the physical layer measurement result in the SBFD time unit, and separately perform filtering processing on the physical layer measurement result in the non-SBFD time unit.

For a principle of performing, by the terminal device, first-type filtering processing according to the RRM measurement configuration information, refer to related descriptions in Manner 1. For a principle of performing, by the terminal device, second-type filtering processing according to the RRM measurement configuration information, refer to related descriptions in Manner 2. Details are not described herein again.

For example, physical layer measurement results in the time units include a physical layer measurement result #1 to a physical layer measurement result #4. If the physical layer measurement result #1 and the physical layer measurement result #4 are physical layer measurement results in SBFD time units, and the physical layer measurement result #2 and the physical layer measurement result #3 are physical layer measurement results in non-SBFD time units, as shown in FIG. 11, filtering processing may be performed on the physical layer measurement result #1 and the physical layer measurement result #4 to obtain a first-type measurement result, and filtering processing may be performed on the physical layer measurement result #2 and the physical layer measurement result #3 to obtain a second-type measurement result.

It should be understood that, in this embodiment of this application, physical layer measurement results of different measurement quantities in a same type of time unit, for example, the SBFD time unit or the non-SBFD time unit, are independently processed. For example, for the SBFD time unit, first-type filtering processing is independently performed on a physical layer measurement result corresponding to the measurement quantity SINR, and first-type filtering processing is independently performed on a physical layer measurement result corresponding to the measurement quantity RSRQ.

S704. The terminal device performs cell management based on a filtered measurement result.

In a possible implementation solution, if the terminal device is in a connected state, S704 may include: The terminal device sends the filtered measurement result. Correspondingly, the network device receives the filtered measurement result. To be specific, the terminal device reports the first-type measurement result and/or the second-type measurement result.

It should be understood that if the RRM measurement configuration information falls within the foregoing Case 1, the terminal device reports the first-type measurement result.

If the RRM measurement configuration information falls within the foregoing Case 2, the terminal device reports the second-type measurement result.

If the RRM measurement configuration information falls within the foregoing Case 3, the terminal device may report the first-type measurement result, the second-type measurement result, or the first-type measurement result and the second-type measurement result. In this case, which measurement results in the first-type measurement result and the second-type measurement result are specifically reported by the terminal may be agreed on in a protocol, configured by the network device, or determined based on values of the first-type measurement result and the second-type measurement result. For example, a measurement result that exceeds a corresponding threshold may be reported.

In a possible implementation solution, that the terminal device reports the first-type measurement result and/or the second-type measurement result may include: The terminal device periodically reports the first-type measurement result and/or the second-type measurement result. In other words, the terminal device may report the first-type measurement result and/or the second-type measurement result at one or more preset moments, where any two adjacent preset moments in the plurality of preset moments are spaced by a same time length.

In a possible implementation solution, the terminal device may report the first-type measurement result and/or the second-type measurement result in an event-triggered manner.

For example, the terminal device may send the first-type measurement result and/or the second-type measurement result based on a magnitude of at least one of the first-type measurement result and the second-type measurement result.

In Case 1, the terminal device may send the first-type measurement result based on a magnitude of at least one of the first-type measurement result and the second-type measurement result.

For example, the terminal device may send the first-type measurement result when the first-type measurement result is greater than or equal to a first threshold, and/or the second-type measurement result is greater than or equal to a second threshold.

In Case 2, the terminal device may send the second-type measurement result based on a magnitude of at least one of the first-type measurement result and the second-type measurement result.

For example, the terminal device may send the first-type measurement result when the first-type measurement result is greater than or equal to a third threshold, and/or the second-type measurement result is greater than or equal to a fourth threshold.

In Case 3, the terminal device may send the first-type measurement result and the second-type measurement result based on a magnitude of at least one of the first-type measurement result and the second-type measurement result.

The terminal device may send the first-type measurement result and the second measurement result when the first-type measurement result is greater than or equal to a fifth threshold, and/or the second-type measurement result is greater than or equal to a sixth threshold.

In a possible design solution, if the terminal device is in an idle state or an inactive state, the terminal device selects a cell or reselects a cell based on the filtered measurement result.

The terminal device sends the first-type measurement result, so that the network device can obtain an RRM measurement result for cell handover, thereby improving service continuity of the terminal device. The terminal device performs cell selection and/or reselection based on the first-type measurement result, so that service continuity of the terminal device can be improved.

The terminal device sends the second-type measurement result, so that the network device can obtain an RRM measurement result for cell handover, thereby improving service continuity of the terminal device. The terminal device performs cell selection and/or reselection based on the second-type measurement result, so that service continuity of the terminal device can be improved.

For an implementation in which the terminal device performs cell selection and/or reselection based on a third-type measurement result, refer to an existing implementation of performing cell selection and/or reselection. Details are not described herein.

Based on the communication method provided in FIG. 7, the network device may generate and send the RRM measurement configuration information, and the terminal device may perform filtering processing according to the RRM measurement configuration information. The RRM measurement configuration information indicates that physical layer measurement results in different types of time units, for example, the SBFD time unit and the non-SBFD time unit, each use one filtering processing manner, for example, the first-type filtering processing and the second-type filtering processing. Therefore, the terminal device may separately perform filtering processing on the physical layer measurement results in the different types of time units based on the filtering processing manner corresponding to each type of time unit, so that RRM measurement and reporting can be more flexible and adapt to more scenarios.

In addition, the separately performing filtering processing on the physical layer measurement results in the different types of time units based on the filtering processing manner corresponding to each type of time unit can avoid mutual impact between filtering results in different types of time units, thereby improving accuracy of RRM measurement.

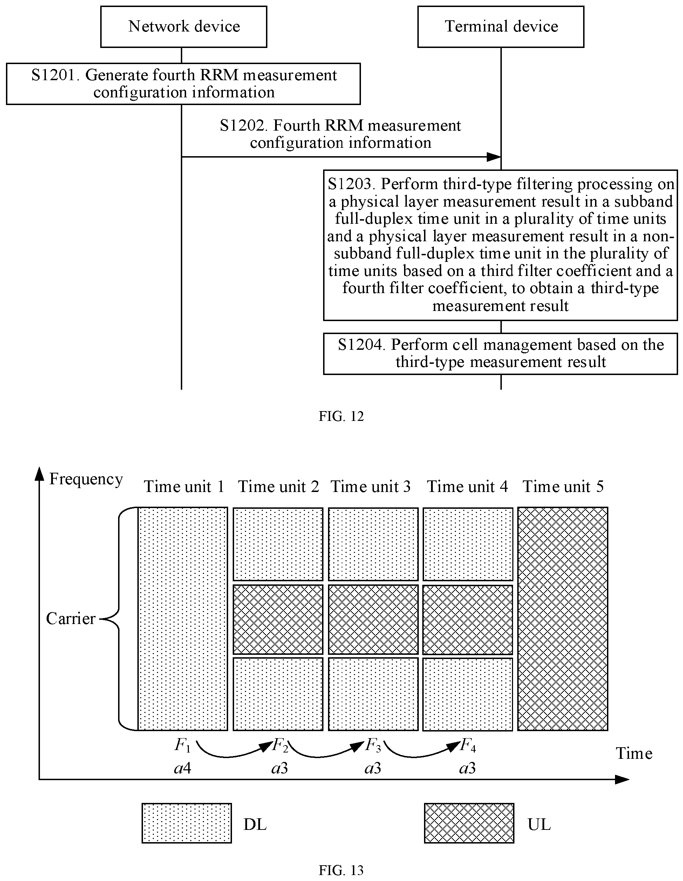

In some embodiments, different filter coefficients may be configured for different types of time units, and combined filtering is performed on physical layer measurement results in the different types of time units. In this case, a communication method provided in an embodiment of this application is shown in FIG. 12. The method provided in FIG. 12 includes S1201 to S1203.

S1201. A network device generates fourth RRM measurement configuration information.

The fourth RRM measurement configuration information indicates a third filter coefficient associated with a physical layer measurement result in an SBFD time unit and a fourth filter coefficient associated with a physical layer measurement result in a non-SBFD time unit.

The third filter coefficient is a coefficient used to perform filtering processing on the physical layer measurement result in the SBFD time unit, and the fourth filter coefficient is a coefficient used to perform filtering processing on the physical layer measurement result in the non-SBFD time unit.

It should be understood that, for example, the filtering processing on the physical layer measurement result in the SBFD time unit is layer 3 filtering (or higher-layer filtering), and the filtering processing on the physical layer measurement result in the non-subband full-duplex time unit is also layer 3 filtering (or higher-layer filtering).

It may be understood that a filter coefficient associated with a physical layer measurement result in a time unit A is a filter coefficient used to perform filtering processing on the physical layer measurement result in the time unit A. The filter coefficient associated with the physical layer measurement result in the time unit A may also be referred to as a filter coefficient corresponding to the physical layer measurement result in the time unit A. The third filter coefficient associated with the physical layer measurement result in the SBFD time unit is a filter coefficient used to perform filtering processing on the physical layer measurement result in the SBFD time unit, and the fourth filter coefficient associated with the physical layer measurement result in the non-SBFD time unit is a filter coefficient used to perform filtering processing on the physical layer measurement result in the non-SBFD time unit. It may be understood that the fourth RRM measurement configuration information may directly indicate the third filter coefficient associated with the physical layer measurement result in the SBFD time unit. In this case, the fourth RRM measurement configuration information may include the third filter coefficient. Alternatively, the fourth RRM measurement configuration information may indirectly indicate the third filter coefficient associated with the physical layer measurement result in the SBFD time unit. In this case, the fourth RRM measurement configuration information may include an index of the third filter coefficient, or the fourth RRM measurement configuration information may include other information corresponding to the third filter coefficient. Details are not described herein.

Similarly, the fourth RRM measurement configuration information may directly indicate the fourth filter coefficient associated with the physical layer measurement result in the non-SBFD time unit. In this case, the fourth RRM measurement configuration information may include the fourth filter coefficient. Alternatively, the fourth RRM measurement configuration information may indirectly indicate the fourth filter coefficient associated with the physical layer measurement result in the non-SBFD time unit. In this case, the fourth RRM measurement configuration information may include an index of the fourth filter coefficient or other information corresponding to the fourth filter coefficient. Details are not described herein.

In a possible implementation solution, the fourth RRM measurement configuration information is associated with a third measurement result corresponding to a third measurement quantity, and the third measurement result is obtained through filtering processing on a physical layer measurement result corresponding to the third measurement quantity in the SBFD time unit and a physical layer measurement result corresponding to the third measurement quantity in the non-SBFD time unit.

In a possible implementation solution, the third measurement quantity includes at least one of the following: a SINR, RSRQ, or an RSSI. In other words, the fourth RRM measurement configuration information may be associated with one or more measurement quantities.

In this way, a measurement quantity can be configured based on an actual scenario, so that RRM measurement is more flexible.

It should be understood that the foregoing third measurement quantity is merely used as an example. In actual implementation, the third measurement quantity may alternatively be another possible measurement quantity, for example, RSRP.

In this case, the physical layer measurement result in the SBFD time unit is a physical layer measurement result corresponding to the third measurement quantity in the SBFD time unit, and the physical layer measurement result in the non-SBFD time unit is a physical layer measurement result corresponding to the third measurement quantity in the non-SBFD time unit. One third measurement quantity corresponds to two filter coefficients, that is, the third filter coefficient and the fourth filter coefficient. With reference to the foregoing descriptions, it can be learned that each measurement quantity combined with the SBFD time unit corresponds to one third filter coefficient, and each measurement quantity combined with the non-SBFD time unit corresponds to one fourth filter coefficient. For example, the third measurement quantity includes the SINR, the RSRQ, and the RSSI. The measurement quantities, the time units, and filter coefficients meet correspondences shown in Table 3:

**Table 3**

| Time unit | Measurement quantity | Filter coefficient |
|---|---|---|
| SBFD time unit | SINR | Third filter coefficient #1 |
| SBFD time unit | RSRQ | Third filter coefficient #2 |
| SBFD time unit | RSSI | Third filter coefficient #3 |
| Non-SBFD time unit | SINR | Fourth filter coefficient #1 |
| Non-SBFD time unit | RSRQ | Fourth filter coefficient #2 |
| Non-SBFD time unit | RSSI | Fourth filter coefficient #3 |

In the foregoing Table 3, each row represents one correspondence between a time unit, a measurement quantity, and a filter coefficient. For a plurality of time units, regarding a measurement quantity corresponding to an SBFD time unit in the plurality of time units and a measurement quantity corresponding to a non-SBFD time unit in the plurality of time units, the correspondences shown in Table 3 are merely used as examples. In actual implementation, there may be other correspondences, and details are not described herein.

In some embodiments, the fourth RRM measurement configuration information may include correspondences between time units, measurement quantities, and filter coefficients, for example, the correspondences shown in Table 3.

First filter coefficients corresponding to different measurement quantities may be the same or different. Second filter coefficients corresponding to different measurement quantities may be the same or different.

It should be understood that in the plurality of time units, a third filter coefficient corresponding to a measurement quantity combined with the SBFD time unit may be the same as or different from a fourth filter coefficient corresponding to the measurement quantity combined with the non-SBFD time unit. For example, with reference to Table 3, a measurement quantity in the SBFD time unit in the plurality of time units is the SINR, and a measurement quantity in the non-SBFD time unit in the plurality of time units is the SINR. In this case, the third filter coefficient #1 and the fourth filter coefficient #1 may be the same or different.

S1202. The network device sends the fourth RRM measurement configuration information. Correspondingly, a terminal device receives the fourth RRM measurement configuration information.

The fourth RRM measurement configuration information may be carried in higher-layer signaling. For example, the RRM measurement configuration information may be carried in RRC signaling or a MAC-CE.

S1203. The terminal device performs filtering processing on a physical layer measurement result in an SBFD time unit in a plurality of time units and a physical layer measurement result in a non-SBFD time unit in the plurality of time units based on the third filter coefficient and the fourth filter coefficient, to obtain a third-type measurement result.

It can be learned that the third-type measurement result is obtained by the terminal device by performing filtering processing on physical layer measurement results in the plurality of time units according to the fourth RRM measurement configuration.

When the fourth RRM configuration is associated with the third measurement quantity, the third-type measurement result includes a third measurement result corresponding to each third measurement quantity, or in other words, the third measurement result belongs to the third-type measurement result.

In this way, the network device may configure a measurement quantity, for example, the third measurement quantity, thereby improving flexibility of RRM measurement.

In a possible implementation solution, that the terminal device performs filtering processing on the physical layer measurement result in the SBFD time unit in the plurality of time units and the physical layer measurement result in the non-SBFD time unit in the plurality of time units based on the third filter coefficient and the fourth filter coefficient is performing filtering processing on a physical layer measurement result corresponding to the third measurement quantity in the SBFD time unit in the plurality of time units and a physical layer measurement result corresponding to the third measurement quantity in the non-SBFD time unit in the plurality of time units based on the third filter coefficient and the fourth filter coefficient.

That is, when filtering processing is performed for each of the plurality of time units, filtering processing is performed on the physical layer measurement result in the SBFD time unit by using the third filter coefficient, and the physical layer measurement result in the non-SBFD time unit is processed by using the fourth filter coefficient. It should be understood that filtering processing is separately performed on physical layer measurement results corresponding to each measurement quantity in different time units. For example, assuming that the third measurement quantity includes the SINR, the RSRQ, and the RSSI, filtering processing is separately performed on physical layer measurement results corresponding to the SINR in the plurality of time units to obtain a third measurement result; filtering processing is separately performed on physical layer measurement results corresponding to the RSRQ in the plurality of time units to obtain a third measurement result; and filtering processing is separately performed on physical layer measurement results corresponding to the RSSI in the plurality of time units to obtain a third measurement result. For ease of understanding, the following uses an example in which the third measurement quantity is the SINR to describe a principle of filtering processing in this embodiment of this application.

For ease of understanding, the following provides descriptions with reference to time units shown in FIG. 13.

It is assumed that the time unit 1 is a non-SBFD time unit, the time unit 2 to the time unit 4 are SBFD time units, the time unit 5 is an uplink time unit, and physical layer measurement results in the time unit 1 to the time unit 4 are sequentially correspondingly *X*₁, *X*₂, *X*₃, *and X*₄. It is assumed that physical layer measurement results on which the 1^{st} filtering processing to the 3^{rd} filtering processing are performed are represented by *M*₁, *M*₂, *M*₃, and *M*₄ sequentially, the third filter coefficient is *a*3, and the fourth filter coefficient is *a*4. Then, the third filter coefficient *a*4 is used for filtering in the 1^{st} filtering processing, and a measurement result *F*₁ obtained through the 1^{st} filtering processing meets a relationship shown in the following formula (10): ${F}_{1} = \left(1-a4\right) ∗ {F}_{0} + a 4 ∗ {M}_{1}$ (10)

*F*₀ = *M*₁. When a physical layer measurement result on which the 1^{st} filtering processing is performed is the physical layer measurement result *X*₁ in the time unit 1, *M*₁ = *X*₁, that is, *M*₁ is equal to the physical layer measurement result in the time unit 1, and *F*₀ is equal to the physical layer measurement result in the time unit 1.

The third filter coefficient *a*3 is used for filtering in the 2^{nd} filtering processing, and a result *F*₂ obtained through the 2^{nd} filtering processing meets a relationship shown in the following formula (11): ${F}_{2} = \left(1-a3\right) ∗ {F}_{1} + a 3 ∗ {M}_{2}$ (11)

When a physical layer measurement result on which the 2^{nd} filtering processing is performed is the physical layer measurement result *X*₂ in the time unit 2, *M*₂ *= X*₂, that is, *M*₂ is equal to the physical layer measurement result in the time unit 2.

The third filter coefficient *a*3 is used for filtering in the 3^{rd} filtering processing, and a result *F*₃ obtained through the 3^{rd} filtering processing meets a relationship shown in the following formula (12): ${F}_{3} = \left(1-a3\right) ∗ {F}_{2} + a 3 ∗ {M}_{3}$ (12)

When a physical layer measurement result on which the 3^{rd} filtering processing is performed is the physical layer measurement result *X*₃ in the time unit 3, *M*₃ = *X*₃, that is, *M*₃ is equal to the physical layer measurement result in the time unit 3.

The third filter coefficient *a*3 is used for filtering in the 4^{th} filtering processing, and a result *F*₄ obtained through the 4^{th} filtering processing meets a relationship shown in the following formula (13): ${F}_{4} = \left(1-a3\right) ∗ {F}_{3} + a 3 ∗ {M}_{4}$ (13)

When a physical layer measurement result on which the 4^{th} filtering processing is performed is the physical layer measurement result *X*₄ in the time unit 4, *M*₄ *= X*₄, that is, *M*₄ is equal to the physical layer measurement result in the time unit 4.

With reference to related descriptions of the foregoing formula (10) to formula (13), it can be learned that the third measurement result is the measurement result *F*₄ obtained by filtering the physical layer measurement results in the time unit 1 to the time unit 4. In this case, the third measurement result is the third-type measurement result.

It should be understood that when the fourth RRM measurement configuration information is associated with the third measurement result corresponding to the third measurement quantity, the third measurement result belongs to the third-type measurement result.

The foregoing third measurement quantity is merely used as an example. In actual implementation, there may be a plurality of third measurement quantities. In this case, filtering processing may be performed for each third measurement quantity according to the principle shown in FIG. 12, where filtering processing for different third measurement quantities is independent of each other.

In addition, the method provided in FIG. 12 may further include S1204.

S1204. The terminal device performs cell management based on the third-type measurement result.

In a possible design solution, if the terminal device is in a connected state, S1204 may include: The terminal device sends the third-type measurement result. Correspondingly, the network device receives the third-type measurement result.

The terminal device sends the third-type measurement result, so that the network device can obtain an RRM measurement result for cell handover, thereby improving service continuity of the terminal device.

For an implementation in which the terminal device sends the third-type measurement result and the network device receives the third-type measurement result, refer to an implementation in which a terminal device reports a measurement result to a network device in conventional technologies. Details are not described herein.

In a possible implementation solution, if the terminal device is in an idle state or an inactive state, the terminal device may perform cell selection and/or reselection based on the third-type measurement result.

The terminal device performs cell selection and/or reselection based on the third-type measurement result, so that service continuity of the terminal device can be improved.

For an implementation in which the terminal device performs cell selection and/or reselection based on the third-type measurement result, refer to an existing implementation of cell selection and/or reselection. Details are not described herein.

Based on the method provided in FIG. 12, the terminal device may perform filtering processing according to the fourth RRM measurement configuration information. In the fourth RRM measurement configuration information, physical layer measurement results in different types of time units, for example, the SBFD time unit and the non-SBFD time unit, are each associated with one filter coefficient, for example, the third filter coefficient and the fourth filter coefficient. In this way, when filtering the physical layer measurement results in the different types of time units, the terminal device can use filter coefficients corresponding to the different types of time units, so that RRM measurement can be more flexible and adapt to more scenarios.

In addition, filter coefficients may be further configured based on different types of time units, so that accuracy of RRM measurement can be improved.

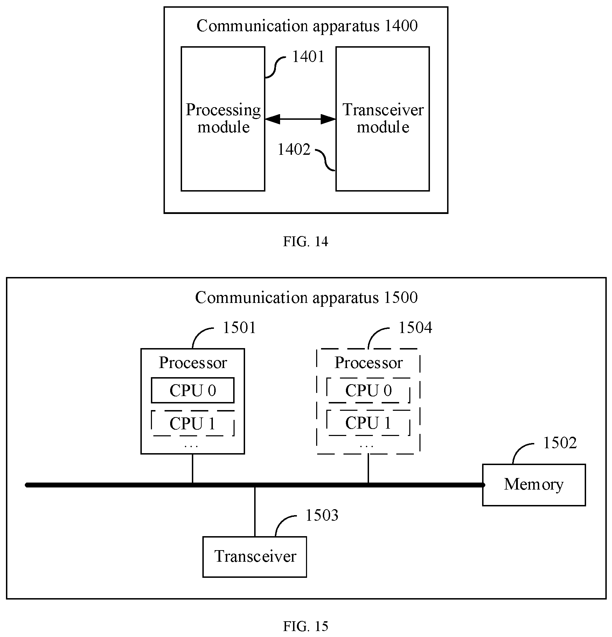

The foregoing describes, in detail with reference to FIG. 7 to FIG. 13, the communication method provided in embodiments of this application. The following describes, in detail with reference to FIG. 14 and FIG. 15, a communication apparatus configured to perform the communication method provided in embodiments of this application.

For example, FIG. 14 is a diagram 1 of a structure of a communication apparatus according to an embodiment of this application. As shown in FIG. 14, the communication apparatus 1400 includes a processing module 1401 and a transceiver module 1402. For ease of description, FIG. 14 shows only main parts of the communication apparatus.

In some embodiments, the communication apparatus 1400 can be used in the communication system shown in FIG. 6, to perform functions of the terminal device in the communication method shown in FIG. 7.

The transceiver module 1402 is configured to receive radio resource management RRM measurement configuration information. The RRM measurement configuration information indicates to perform first-type filtering processing and/or second-type filtering processing. There is a correspondence between the first-type filtering processing and a subband full-duplex time unit, and there is a correspondence between the second-type filtering processing and a non-subband full-duplex time unit. The first-type filtering processing is filtering processing on a physical layer measurement result in the subband full-duplex time unit, and the second-type filtering processing is filtering processing on a physical layer measurement result in the non-subband full-duplex time unit. The processing module 1401 is configured to perform first-type filtering processing and/or second-type filtering processing according to the RRM measurement configuration information.

In a possible implementation solution, the RRM measurement configuration information includes first RRM measurement configuration information. The first RRM measurement configuration information is associated with the physical layer measurement result in the subband full-duplex time unit.

In a possible implementation solution, the processing module 1401 is further configured to perform first-type filtering processing on a physical layer measurement result in a subband full-duplex time unit in at least one time unit based on the first RRM measurement configuration information, to obtain a first-type measurement result.

In a possible implementation solution, the first RRM measurement configuration information is associated with a first measurement result corresponding to a first measurement quantity, and the first measurement result is obtained through first-type filtering processing on a physical layer measurement result corresponding to the first measurement quantity in the subband full-duplex time unit in the at least one time unit. The first measurement result belongs to the first-type measurement result.

In a possible implementation solution, the transceiver module 1402 is further configured to send the first-type measurement result, or the processing module 1401 is further configured to perform cell selection or reselection based on the first-type measurement result.

In a possible implementation solution, the RRM measurement configuration information includes second RRM measurement configuration information, and the second RRM measurement configuration information is associated with the physical layer measurement result in the non-subband full-duplex time unit.

In a possible implementation solution, the performing first-type filtering processing and/or second-type filtering processing according to the RRM measurement configuration information includes: performing second-type filtering processing on a physical layer measurement result in a non-subband full-duplex time unit in the at least one time unit according to the second RRM measurement configuration information, that is, separately performing filtering processing on the physical layer measurement result in the non-subband full-duplex time unit, to obtain a second-type measurement result.

In a possible implementation solution, the second RRM measurement configuration information is associated with a second measurement result corresponding to a second measurement quantity, and the second measurement result is obtained through second-type filtering processing on a physical layer measurement result corresponding to the second measurement quantity in the non-subband full-duplex time unit in the at least one time unit. The second measurement result belongs to the second-type measurement result.

In a possible implementation solution, the transceiver module 1402 is further configured to send the second-type measurement result, or perform cell selection or reselection based on the second-type measurement result.

In a possible implementation solution, the RRM measurement configuration information includes third RRM measurement configuration information. The third RRM measurement configuration information is associated with the physical layer measurement result in the subband full-duplex time unit and the physical layer measurement result in the subband full-duplex time unit.

In a possible implementation solution, the processing module 1401 is further configured to perform first-type filtering processing on a physical layer measurement result in a subband full-duplex time unit in a plurality of time units according to the third RRM measurement configuration information, to obtain a first-type measurement result; and perform second-type filtering processing on a physical layer measurement result in a non-subband full-duplex time unit in the plurality of time units according to the third RRM measurement configuration information, to obtain a second-type measurement result.

In a possible implementation solution, the third RRM measurement configuration information is associated with a first measurement result corresponding to a first measurement quantity and a second measurement result corresponding to a second measurement quantity. The first measurement result is obtained through first-type filtering processing on a physical layer measurement result corresponding to the first measurement quantity in the subband full-duplex time unit in the plurality of time units. The second measurement result is obtained through second-type filtering processing on a physical layer measurement result corresponding to the second measurement quantity in the non-subband full-duplex time unit in the plurality of time units. The first measurement result belongs to the first-type measurement result, and the second measurement result belongs to the second-type measurement result.

In a possible implementation solution, the third RRM measurement configuration information includes information indicating a first filter coefficient and a second filter coefficient, the first filter coefficient is used to obtain the first measurement result, and the second filter coefficient is used to obtain the second measurement result.

In a possible implementation solution, the transceiver module 1402 is further configured to send the first-type measurement result and/or the second-type measurement result.

In a possible implementation solution, the transceiver module 1402 is further configured to send the first-type measurement result and/or the second-type measurement result based on a magnitude of at least one of the first-type measurement result and the second-type measurement result.

In a possible implementation solution, the transceiver module 1402 is further configured to perform cell selection based on the first-type measurement result and/or the second-type measurement result, or the processing module 1401 is further configured to perform cell reselection based on the first-type measurement result and/or the second-type measurement result.

In a possible implementation solution, the first measurement quantity is one of the following: a signal to interference plus noise ratio SINR, reference signal received quality RSRQ, or a received signal strength indicator RSSI; and the second measurement quantity is one of the following: the SINR, the RSRQ, or the RSSI. In this way, a measurement quantity can be configured based on an actual scenario, thereby further improving flexibility of RRM measurement.

Optionally, the transceiver module 1402 may include a receiving module and a sending module (not shown in FIG. 14). The transceiver module 1402 is configured to implement a sending function and a receiving function of the communication apparatus 1400.

Optionally, the communication apparatus 1400 may further include a storage module (not shown in FIG. 14), and the storage module stores a program or instructions. When the processing module 1401 executes the program or the instructions, the communication apparatus 1400 is enabled to perform functions of the terminal device in the communication method shown in FIG. 7.

It should be understood that the processing module 1401 in the communication apparatus 1400 may be implemented by a processor or a processor-related circuit component, and may be a processor or a processing unit; and the transceiver module 1402 may be implemented by a transceiver or a transceiver-related circuit component, and may be a transceiver or a transceiver unit.

It should be noted that the communication apparatus 1400 may be a terminal device, a chip (system) or another component or element that may be disposed in the terminal device, or an apparatus including the terminal device. This is not limited in this application.

In addition, for technical effects of the communication apparatus 1400, refer to the technical effects of the communication method shown in FIG. 7. Details are not described herein again.

In some other embodiments, the communication apparatus 1400 can be used in the communication system shown in FIG. 6, to perform functions of the network device in the communication method shown in FIG. 7.

The processing module 1401 is configured to determine radio resource management RRM measurement configuration information. The RRM measurement configuration information indicates to perform first-type filtering processing and/or second-type filtering processing. There is a correspondence between the first-type filtering processing and a subband full-duplex time unit, and there is a correspondence between the second-type filtering processing and a non-subband full-duplex time unit. The first-type filtering processing is filtering processing on a physical layer measurement result in the subband full-duplex time unit, and the second-type filtering processing is filtering processing on a physical layer measurement result in the non-subband full-duplex time unit. The transceiver module 1402 is configured to send the RRM measurement configuration information.

In a possible implementation solution, the RRM measurement configuration information includes first RRM measurement configuration information. The first RRM measurement configuration information is associated with the physical layer measurement result in the subband full-duplex time unit.

In a possible implementation solution, the first RRM measurement configuration information is associated with a first measurement result corresponding to a first measurement quantity, and the first measurement result is obtained through first-type filtering processing on a physical layer measurement result corresponding to the first measurement quantity in a subband full-duplex time unit in at least one time unit.

In a possible implementation solution, the transceiver module 1402 is further configured to receive a first-type measurement result. The first-type measurement result is obtained by a terminal device by performing first-type filtering processing on a physical layer measurement result in the subband full-duplex time unit in the at least one time unit based on the first RRM measurement configuration, and the first measurement result belongs to the first-type measurement result.

In a possible implementation solution, the RRM measurement configuration information includes second RRM measurement configuration information. The second RRM measurement configuration information is associated with the physical layer measurement result in the non-subband full-duplex time unit.

In a possible implementation solution, the second RRM measurement configuration information is associated with a second measurement result corresponding to a second measurement quantity, and the second measurement result is obtained through second-type filtering processing on a physical layer measurement result corresponding to the second measurement quantity in a non-subband full-duplex time unit in the at least one time unit.

In a possible implementation solution, the transceiver module 1402 is further configured to receive a second-type measurement result. The second-type measurement result is obtained by the terminal device by performing second-type filtering processing on a physical layer measurement result in the non-subband full-duplex time unit in the at least one time unit according to the second RRM measurement configuration information, and the second measurement result belongs to the second-type measurement result.

In a possible implementation solution, the RRM measurement configuration information includes third RRM measurement configuration information. The third RRM measurement configuration information is associated with the physical layer measurement result in the subband full-duplex time unit and the physical layer measurement result in the subband full-duplex time unit.

In a possible implementation solution, the RRM measurement configuration information includes the third RRM measurement configuration information, and the third RRM measurement configuration information is associated with a first measurement result corresponding to a first measurement quantity and a second measurement result corresponding to a second measurement quantity. The first measurement result is obtained through first-type filtering processing on a physical layer measurement result corresponding to the first measurement quantity in a subband full-duplex time unit in a plurality of time units. The second measurement result is obtained through second-type filtering processing on a physical layer measurement result corresponding to the second measurement quantity in a non-subband full-duplex time unit in the plurality of time units.

In a possible implementation solution, the transceiver module 1402 is further configured to receive a first-type measurement result and/or a second-type measurement result. The first-type measurement result is obtained by a terminal device by performing first-type filtering processing on a physical layer measurement result in the subband full-duplex time unit in the plurality of time units according to the third RRM measurement configuration information, and the second-type measurement result is obtained by the terminal device by performing second-type filtering processing on a physical layer measurement result in the non-subband full-duplex time unit in the plurality of time units according to the third RRM measurement configuration information. The first measurement result belongs to the first-type measurement result, and the second measurement result belongs to the second-type measurement result.

In a possible implementation solution, the third RRM measurement configuration information includes information indicating a first filter coefficient and a second filter coefficient, the first filter coefficient is used to obtain the first measurement result corresponding to the first measurement quantity, and the second filter coefficient is used to obtain the second measurement result corresponding to the second measurement quantity.

In a possible implementation solution, the first measurement quantity is one of the following: a signal to interference plus noise ratio SINR, reference signal received quality RSRQ, or a received signal strength indicator RSSI; and the second measurement quantity is one of the following: the SINR, the RSRQ, or the RSSI.

Optionally, the transceiver module 1402 may include a receiving module and a sending module (not shown in FIG. 14). The transceiver module 1402 is configured to implement a sending function and a receiving function of the communication apparatus 1400.

Optionally, the communication apparatus 1400 may further include a storage module (not shown in FIG. 14), and the storage module stores a program or instructions. When the processing module 1401 executes the program or the instructions, the communication apparatus 1400 is enabled to perform functions of the network device in the communication method shown in FIG. 7.

It should be understood that the processing module 1401 in the communication apparatus 1400 may be implemented by a processor or a processor-related circuit component, and may be a processor or a processing unit; and the transceiver module 1402 may be implemented by a transceiver or a transceiver-related circuit component, and may be a transceiver or a transceiver unit.

It should be noted that the communication apparatus 1400 may be a terminal device, a chip (system) or another component or element that may be disposed in the terminal device, or an apparatus including the network device. This is not limited in this application.

In addition, for technical effects of the communication apparatus 1400, refer to the technical effects of the communication method shown in FIG. 7. Details are not described herein again.

In some other embodiments, the communication apparatus 1400 can be used in the communication system shown in FIG. 6, to perform functions of the terminal device in the communication method shown in FIG. 12.

The transceiver module 1402 is configured to receive fourth radio resource management RRM measurement configuration information. The fourth RRM measurement configuration information includes first information, and the first information indicates a third filter coefficient associated with a physical layer measurement result in a subband full-duplex time unit and a fourth filter coefficient associated with a physical layer measurement result in a non-subband full-duplex time unit. The processing module 1401 is configured to perform third-type filtering processing on a physical layer measurement result in a subband full-duplex time unit in a plurality of time units and a physical layer measurement result in a non-subband full-duplex time unit in the plurality of time units based on the third filter coefficient and the fourth filter coefficient, to obtain a third-type measurement result.

In a possible implementation solution, the fourth RRM measurement configuration information is associated with a third measurement result corresponding to a third measurement quantity, and the third measurement result is obtained through third-type filtering processing on a physical layer measurement result corresponding to the third measurement quantity in the subband full-duplex time unit in the plurality of time units and a physical layer measurement result corresponding to the third measurement quantity in the non-subband full-duplex time unit in the plurality of time units. The third measurement result belongs to the third-type measurement result.

In a possible implementation solution, the third measurement quantity includes at least one of the following: a signal to interference plus noise ratio SINR, reference signal received quality RSRQ, and a received signal strength indicator RSSI.

In a possible implementation solution, the transceiver module 1402 is further configured to send the third-type measurement result, or the processing module 1401 is further configured to perform cell selection and/or reselection based on the third-type measurement result.

Optionally, the transceiver module 1402 may include a receiving module and a sending module (not shown in FIG. 14). The transceiver module 1402 is configured to implement a sending function and a receiving function of the communication apparatus 1400.

Optionally, the communication apparatus 1400 may further include a storage module (not shown in FIG. 14), and the storage module stores a program or instructions. When the processing module 1401 executes the program or the instructions, the communication apparatus 1400 is enabled to perform functions of the terminal device in the communication method shown in FIG. 12.

It should be understood that the processing module 1401 in the communication apparatus 1400 may be implemented by a processor or a processor-related circuit component, and may be a processor or a processing unit; and the transceiver module 1402 may be implemented by a transceiver or a transceiver-related circuit component, and may be a transceiver or a transceiver unit.

It should be noted that the communication apparatus 1400 may be a terminal device, a chip (system) or another component or element that may be disposed in the terminal device, or an apparatus including the terminal device. This is not limited in this application.

In addition, for technical effects of the communication apparatus 1400, refer to the technical effects of the communication method shown in FIG. 12. Details are not described herein again.

In some other embodiments, the communication apparatus 1400 can be used in the communication system shown in FIG. 6, to perform functions of the network device in the communication method shown in FIG. 12.

The processing module 1401 is configured to obtain fourth radio resource management RRM measurement configuration information. The fourth RRM measurement configuration information includes first information, and the first information indicates a third filter coefficient associated with a physical layer measurement result in a subband full-duplex time unit and a fourth filter coefficient associated with a physical layer measurement result in a non-subband full-duplex time unit. The transceiver module 1402 is configured to send the fourth RRM configuration information.

In a possible implementation solution, the fourth RRM measurement configuration information is associated with a third measurement result corresponding to a third measurement quantity. The third measurement result is obtained through third-type filtering processing on a physical layer measurement result corresponding to the third measurement quantity in a subband full-duplex time unit in a plurality of time units and a physical layer measurement result corresponding to the third measurement quantity in a non-subband full-duplex time unit in the plurality of time units.

In a possible implementation solution, the third measurement quantity includes at least one of the following: a signal to interference plus noise ratio SINR, reference signal received quality RSRQ, and a received signal strength indicator RSSI.

In a possible implementation solution, the transceiver module 1402 is further configured to receive a third-type measurement result. The third-type measurement result is obtained by a terminal device by performing third-type filtering processing on physical layer measurement results in the plurality of time units according to the fourth RRM measurement configuration information, and the third measurement result belongs to the third-type measurement result.

Optionally, the transceiver module 1402 may include a receiving module and a sending module (not shown in FIG. 14). The transceiver module 1402 is configured to implement a sending function and a receiving function of the communication apparatus 1400.

Optionally, the communication apparatus 1400 may further include a storage module (not shown in FIG. 14), and the storage module stores a program or instructions. When the processing module 1401 executes the program or the instructions, the communication apparatus 1400 is enabled to perform functions of the network device in the communication method shown in FIG. 12.

It should be understood that the processing module 1401 in the communication apparatus 1400 may be implemented by a processor or a processor-related circuit component, and may be a processor or a processing unit; and the transceiver module 1402 may be implemented by a transceiver or a transceiver-related circuit component, and may be a transceiver or a transceiver unit.

It should be noted that the communication apparatus 1400 may be a network device, a chip (system) or another component or element that may be disposed in the network device, or an apparatus including the network device. This is not limited in this application.

In addition, for technical effects of the communication apparatus, refer to the technical effects of the communication method shown in FIG. 12. Details are not described herein again.

For example, FIG. 15 is a diagram 2 of a structure of a communication apparatus according to an embodiment of this application. The communication apparatus may be a terminal device or a network device, or may be a chip (system) or another component or element that may be disposed in the terminal device or the network device. As shown in FIG. 15, the communication apparatus 1500 may include a processor 1501. Optionally, the communication apparatus 1500 may further include a memory 1502 and/or a transceiver 1503. The processor 1501 is coupled to the memory 1502 and the transceiver 1503, which may be connected, for example, through a communication bus.

The following specifically describes components of the communication apparatus 1500 with reference to FIG. 15.

The processor 1501 is a control center of the communication apparatus 1500, which may be one processor, or may be a collective term of a plurality of processing elements. For example, the processor 1501 is one or more central processing units (central processing units, CPUs) or an application-specific integrated circuit (application-specific integrated circuit, ASIC), or is configured as one or more integrated circuits for implementing embodiments of this application, for example, one or more digital signal processors (digital signal processors, DSPs) or one or more field-programmable gate arrays (field-programmable gate arrays, FPGAs).

Optionally, the processor 1501 may perform various functions of the communication apparatus 1500 by running or executing a software program stored in the memory 1502 and invoking data stored in the memory 1502.

During specific implementation, in an embodiment, the processor 1501 may include one or more CPUs, for example, a CPU 0 and a CPU 1 shown in FIG. 15.

During specific implementation, in an embodiment, the communication apparatus 1500 may alternatively include a plurality of processors, for example, the processor 1501 and a processor 1504 shown in FIG. 15. Each of the processors may be a single-core processor (single-CPU), or may be a multi-core processor (multi-CPU). The processor herein may be one or more devices, circuits, and/or processing cores configured to process data (for example, computer program instructions).

The memory 1502 is configured to store the software program for performing the solutions of this application, and the processor 1501 controls execution of the software program. For a specific implementation, refer to the foregoing method embodiments. Details are not described herein again.

Optionally, the memory 1502 may be but is not limited to a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blue-ray disc, or the like), a magnetic disk storage medium or another magnetic storage device, or any other medium that can be used to carry or store expected program code in an instruction or data structure form and that can be accessed by a computer. The memory 1502 may be integrated with the processor 1501, or may exist independently, and is coupled to the processor 1501 through an interface circuit (not shown in FIG. 15) of the communication apparatus 1500. This is not specifically limited in embodiments of this application.

The transceiver 1503 is configured to communicate with another communication apparatus. For example, the communication apparatus 1500 is a terminal device, and the transceiver 1503 may be configured to communicate with a network device or another terminal device. For another example, the communication apparatus 1500 is a network device, and the transceiver 1503 may be configured to communicate with a terminal device or another network device.

Optionally, the transceiver 1503 may include a receiver and a transmitter (not separately shown in FIG. 15). The receiver is configured to implement a receiving function, and the transmitter is configured to implement a sending function.

Optionally, the transceiver 1503 may be integrated with the processor 1501, or may exist independently, and is coupled to the processor 1501 through an interface circuit (not shown in FIG. 15) of the communication apparatus 1500. This is not specifically limited in embodiments of this application.

It should be noted that the structure of the communication apparatus 1500 shown in FIG. 15 does not constitute a limitation on the communication apparatus. The communication apparatus may actually include more or fewer components than those shown in the figure, or combine some components, or have a different component arrangement.

In addition, for technical effect of the communication apparatus 1500, refer to the technical effects of the communication method in the foregoing method embodiments. Details are not described herein again.

It should be understood that the processor in embodiments of this application may be a CPU, or the processor may be another general-purpose processor, a DSP, an ASIC, an FPGA or another programmable logic device, a discrete gate or transistor logic device, a discrete hardware component, or the like. The general-purpose processor may be a microprocessor, or the processor may be any conventional processor or the like.

It should be further understood that the memory in embodiments of this application may be a volatile memory or a non-volatile memory, or may include a volatile memory and a non-volatile memory. The non-volatile memory may be a ROM, a programmable read-only memory (programmable ROM, PROM), an erasable programmable read-only memory (erasable PROM, EPROM), an EEPROM, or a flash memory. The volatile memory may be a RAM, used as an external cache. By way of example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The foregoing embodiments may be all or partly implemented by using software, hardware (for example, a circuit), firmware, or any combination thereof. When software is used for implementation, the foregoing embodiments may be all or partly implemented in a form of a computer program product. The computer program product includes one or more computer instructions or computer programs. When the computer instructions or the computer programs are loaded and executed on a computer, the procedure or functions according to embodiments of this application are all or partly generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium (for example, a DVD), or a semiconductor medium. The semiconductor medium may be a solid-state drive.

It should be understood that the term "and/or" in this specification merely describes an association relationship between associated objects and represents that three relationships may exist. For example, A and/or B may represent the following three cases: only A exists, both A and B exist, and only B exists, where A and B may be singular or plural. In addition, the character "/" in this specification usually indicates an "or" relationship between the associated objects, but may also indicate an "and/or" relationship, which may be specifically understood with refer to the context.

In this application, "at least one" means one or more, and "a plurality of" means two or more. The expression "at least one of the following (items)" or similar expressions refer to any combination of these items, including any combination of single or plural (items). For example, at least one (item) of a, b, or c may indicate: a, b, c, a-b, a-c, b-c, or a-b-c, where a, b, and c may be singular or plural.

It should be understood that sequence numbers of the foregoing processes in embodiments of this application do not mean execution sequences. The execution sequences of the processes should be determined based on functions and internal logic of the processes, and should not be construed as any limitation on the implementation processes of embodiments of this application.

A person of ordinary skill in the art may be aware that, in combination with units and algorithm steps in examples described in embodiments disclosed in this specification, this application can be implemented by electronic hardware or a combination of computer software and electronic hardware. Whether the functions are executed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, the unit division is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between apparatuses or units may be implemented in electronic, mechanical, or other forms.

The units described as separate parts may or may not be physically separate, and parts displayed as units may or may not be physical units, that is, may be located in one place, or may be distributed on a plurality of network units. A part of or all the units may be selected based on an actual requirement to achieve objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or a part of steps of the methods described in embodiments of this application. The storage medium includes any medium that can store program code, such as a USB flash drive, a removable hard disk drive, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving radio resource management RRM measurement configuration information, wherein the RRM measurement configuration information indicates to perform first-type filtering processing and/or second-type filtering processing, there is a correspondence between the first-type filtering processing and a subband full-duplex time unit, there is a correspondence between the second-type filtering processing and a non-subband full-duplex time unit, the first-type filtering processing is filtering processing on a physical layer measurement result in the subband full-duplex time unit, and the second-type filtering processing is filtering processing on a physical layer measurement result in the non-subband full-duplex time unit; and
performing first-type filtering processing and/or second-type filtering processing according to the RRM measurement configuration information.

2. The method according to claim 1, wherein the RRM measurement configuration information comprises first RRM measurement configuration information, and the first RRM measurement configuration information is associated with the physical layer measurement result in the subband full-duplex time unit.

3. The method according to claim 2, wherein the performing first-type filtering processing and/or second-type filtering processing according to the RRM measurement configuration information comprises:
performing first-type filtering processing on a physical layer measurement result in the subband full-duplex time unit in at least one time unit based on the first RRM measurement configuration information, to obtain a first-type measurement result.

4. The method according to claim 3, wherein the first RRM measurement configuration information is associated with a first measurement result corresponding to a first measurement quantity, and the first measurement result is obtained through first-type filtering processing on a physical layer measurement result corresponding to the first measurement quantity in the subband full-duplex time unit in the at least one time unit; and
the first measurement result belongs to the first-type measurement result.

5. The method according to claim 3 or 4, wherein the method further comprises:
sending the first-type measurement result, or performing cell selection or reselection based on the first-type measurement result.

6. The method according to any one of claims 1 to 5, wherein the RRM measurement configuration information comprises second RRM measurement configuration information, and the second RRM measurement configuration information is associated with the physical layer measurement result in the non-subband full-duplex time unit.

7. The method according to claim 6, wherein the performing first-type filtering processing and/or second-type filtering processing according to the RRM measurement configuration information comprises:
performing second-type filtering processing on a physical layer measurement result in the non-subband full-duplex time unit in the at least one time unit according to the second RRM measurement configuration information, to obtain a second-type measurement result.

8. The method according to claim 7, wherein the second RRM measurement configuration information is associated with a second measurement result corresponding to a second measurement quantity, and the second measurement result is obtained through second-type filtering processing on a physical layer measurement result corresponding to the second measurement quantity in the non-subband full-duplex time unit in the at least one time unit; and
the second measurement result belongs to the second-type measurement result.

9. The method according to any one of claims 6 to 8, wherein the method further comprises:
sending the second-type measurement result, or performing cell selection or reselection based on the second-type measurement result.

10. The method according to claim 1, wherein the RRM measurement configuration information comprises third RRM measurement configuration information, and the third RRM measurement configuration information is associated with the physical layer measurement result in the subband full-duplex time unit and the physical layer measurement result in the subband full-duplex time unit.

11. The method according to claim 10, wherein the performing first-type filtering processing and/or second-type filtering processing according to the RRM measurement configuration information comprises:
performing first-type filtering processing on a physical layer measurement result in the subband full-duplex time unit in a plurality of time units according to the third RRM measurement configuration information, to obtain a first-type measurement result; and
performing second-type filtering processing on a physical layer measurement result in the non-subband full-duplex time unit in the plurality of time units according to the third RRM measurement configuration information, to obtain a second-type measurement result.

12. The method according to claim 11, wherein the third RRM measurement configuration information is associated with a first measurement result corresponding to a first measurement quantity and a second measurement result corresponding to a second measurement quantity, the first measurement result is obtained through first-type filtering processing on a physical layer measurement result corresponding to the first measurement quantity in the subband full-duplex time unit in the plurality of time units, and the second measurement result is obtained through second-type filtering processing on a physical layer measurement result corresponding to the second measurement quantity in the non-subband full-duplex time unit in the plurality of time units; and
the first measurement result belongs to the first-type measurement result, and the second measurement result belongs to the second-type measurement result.

13. The method according to claim 12, wherein the third RRM measurement configuration information comprises information indicating a first filter coefficient and a second filter coefficient, the first filter coefficient is used to obtain the first measurement result, and the second filter coefficient is used to obtain the second measurement result.

14. The method according to any one of claims 11 to 13, wherein the method further comprises:
sending the first-type measurement result and/or the second-type measurement result.

15. The method according to claim 14, wherein the sending the first-type measurement result and/or the second-type measurement result comprises:
sending the first-type measurement result and/or the second-type measurement result based on a magnitude of at least one of the first-type measurement result and the second-type measurement result.

16. The method according to any one of claims 1 to 15, wherein the first measurement quantity is one of the following: a signal to interference plus noise ratio SINR, reference signal received quality RSRQ, or a received signal strength indicator RSSI; and the second measurement quantity is one of the following: the SINR, the RSRQ, or the RSSI.

17. A communication method, wherein the method comprises:
determining radio resource management RRM measurement configuration information, wherein the RRM measurement configuration information indicates to perform first-type filtering processing and/or second-type filtering processing, there is a correspondence between the first-type filtering processing and a subband full-duplex time unit, there is a correspondence between the second-type filtering processing and a non-subband full-duplex time unit, the first-type filtering processing is filtering processing on a physical layer measurement result in the subband full-duplex time unit, and the second-type filtering processing is filtering processing on a physical layer measurement result in the non-subband full-duplex time unit; and
sending the RRM measurement configuration information.

18. The method according to claim 17, wherein the RRM measurement configuration information comprises first RRM measurement configuration information, and the first RRM measurement configuration information is associated with the physical layer measurement result in the subband full-duplex time unit.

19. The method according to claim 18, wherein the first RRM measurement configuration information is associated with a first measurement result corresponding to a first measurement quantity, and the first measurement result is obtained through first-type filtering processing on a physical layer measurement result corresponding to the first measurement quantity in the subband full-duplex time unit in at least one time unit.

20. The method according to claim 19, wherein the method further comprises:
receiving a first-type measurement result, wherein the first-type measurement result is obtained by a terminal device by performing first-type filtering processing on a physical layer measurement result in the subband full-duplex time unit in the at least one time unit based on the first RRM measurement configuration, and the first measurement result belongs to the first-type measurement result.

21. The method according to any one of claims 17 to 20, wherein the RRM measurement configuration information comprises second RRM measurement configuration information, and the second RRM measurement configuration information is associated with the physical layer measurement result in the non-subband full-duplex time unit.

22. The method according to claim 21, wherein the second RRM measurement configuration information is associated with a second measurement result corresponding to a second measurement quantity, and the second measurement result is obtained through second-type filtering processing on a physical layer measurement result corresponding to the second measurement quantity in the non-subband full-duplex time unit in the at least one time unit.

23. The method according to claim 22, wherein the method further comprises:
receiving a second-type measurement result, wherein the second-type measurement result is obtained by the terminal device by performing second-type filtering processing on a physical layer measurement result in the non-subband full-duplex time unit in the at least one time unit according to the second RRM measurement configuration information, and the second measurement result belongs to the second-type measurement result.

24. The method according to claim 17, wherein the RRM measurement configuration information comprises third RRM measurement configuration information, and the third RRM measurement configuration information is associated with the physical layer measurement result in the subband full-duplex time unit and the physical layer measurement result in the subband full-duplex time unit.

25. The method according to claim 24, wherein the RRM measurement configuration information comprises the third RRM measurement configuration information, the third RRM measurement configuration information is associated with a first measurement result corresponding to a first measurement quantity and a second measurement result corresponding to a second measurement quantity, the first measurement result is obtained through first-type filtering processing on a physical layer measurement result corresponding to the first measurement quantity in the subband full-duplex time unit in a plurality of time units, and the second measurement result is obtained through second-type filtering processing on a physical layer measurement result corresponding to the second measurement quantity in the non-subband full-duplex time unit in the plurality of time units.

26. The method according to claim 25, wherein the method further comprises:
receiving a first-type measurement result and/or a second-type measurement result, wherein the first-type measurement result is obtained by a terminal device by performing first-type filtering processing on a physical layer measurement result in the subband full-duplex time unit in the plurality of time units according to the third RRM measurement configuration information, and the second-type measurement result is obtained by the terminal device by performing second-type filtering processing on a physical layer measurement result in the non-subband full-duplex time unit in the plurality of time units according to the third RRM measurement configuration information; and
the first measurement result belongs to the first-type measurement result, and the second measurement result belongs to the second-type measurement result.

27. The method according to claim 25 or 26, wherein the third RRM measurement configuration information comprises information indicating a first filter coefficient and a second filter coefficient, the first filter coefficient is used to obtain the first measurement result corresponding to the first measurement quantity, and the second filter coefficient is used to obtain the second measurement result corresponding to the second measurement quantity.

28. The method according to any one of claims 17 to 27, wherein the first measurement quantity is one of the following: a signal to interference plus noise ratio SINR, reference signal received quality RSRQ, or a received signal strength indicator RSSI; and the second measurement quantity is one of the following: the SINR, the RSRQ, or the RSSI.

29. A communication apparatus, comprising at least one processor, wherein the at least one processor is coupled to one or more memories, the memory is configured to store computer instructions, and when the processor executes the instructions, the communication apparatus is enabled to perform the communication method according to any one of claims 1 to 28.

30. A communication apparatus, comprising a processor and an interface circuit, wherein
the interface circuit is configured to receive code instructions and transmit the code instructions to the processor; and
the processor is configured to run the code instructions to perform the communication method according to any one of claims 1 to 28.

31. A computer-readable storage medium, wherein the computer-readable storage medium comprises a computer program or instructions, and when the computer program or the instructions are run on a computer, the computer is enabled to perform the communication method according to any one of claims 1 to 28.

32. A computer program product, wherein the computer program product comprises a computer program or instructions, and when the computer program or the instructions are run on a computer, the computer is enabled to perform the communication method according to any one of claims 1 to 28.

33. A chip or chip system, comprising at least one processor and a communication interface, wherein the at least one processor is coupled to a memory through the communication interface, and when the at least one processor executes a computer program or instructions in the memory, the method according to any one of claims 1 to 28 is performed.
